# EUROPEAN PATENT SPECIFICATION

(11) **EP 4 068 414 B1**
(45) Date of publication and mention of the grant of the patent: **31.12.2025**
(21) Application number: 21798540.7
(22) Date of filing: 04.02.2021
(51) Int. Cl.: H01M 4/02, H01M 4/64, H01M 4/75, H01M 10/04, H01M 50/103, H01M 50/209

(54) **ELECTRODE ASSEMBLY, BATTERY CELL, BATTERY, AND MANUFACTURING DEVICE AND METHOD FOR ELECTRODE ASSEMBLY**
ELEKTRODENANORDNUNG, BATTERIEZELLE, BATTERIE UND VERFAHREN ZUR HERSTELLUNG EINER ELEKTRODENANORDNUNG
ENSEMBLE ÉLECTRODE, ÉLÉMENT DE BATTERIE, BATTERIE, ET DISPOSITIF ET PROCÉDÉ DE FABRICATION POUR ENSEMBLE ÉLECTRODE

(43) Date of publication of application: 05.10.2022
(60) Divisional application: 25216673.1
(73) Proprietor: Contemporary Amperex Technology (Hong Kong) Limited, Central, Central And Western District (HK)
(72) Inventor: JIN, Haizu, Fujian 352100 (CN); XU, Hu, Fujian 352100 (CN); LI, Baiqing, Fujian 352100 (CN); LI, Xing, Fujian 352100 (CN); LIANG, Chengdu, Fujian 352100 (CN)
(74) Representative: Pfenning, Meinig & Partner mbB
(86) International application number: PCT/CN2021/075357
(87) International publication number: WO 2022/165727

(56) References cited:
- EP-B1- 2 130 263
- CN-A- 1 551 403
- CN-A- 101 652 893
- CN-A- 102 077 392
- CN-A- 102 187 496
- CN-A- 102 544 589
- CN-A- 103 563 158
- CN-A- 109 716 576
- JP-A- H08 130 035
- JP-A- H09 180 759
- JP-A- H09 180 759
- JP-A- H09 213 373
- US-A1- 2014 141 305

## Description

### TECHNICAL FIELD

The present application relates to the technical field of batteries, and in particular, to an electrode assembly, a battery cell, and a battery.

### BACKGROUND

The rechargeable battery generally includes a housing and an electrode assembly. The housing is used to accommodate the electrode assembly an electrolytic solution. The electrode assembly generally includes a positive electrode plate and a negative electrode plate, and electric energy is generated by the movement of metal ions, such as lithium ions, between the positive electrode plate and negative electrode plate.

For general electrode assemblies, arrangement of active substances in the electrode plates is unreasonable and the economy is poor.

JPH09180759A provides a battery with a high filling factor, which has the excellent cycle characteristic and high safety, by forming one surface of a wound positive electrode sheet or a wound negative electrode sheet with the active material having a different charging and discharging characteristic from that of the other surface. SOLUTION: An electrode body, which is formed by spirally winding a positive electrode sheet and a negative electrode sheet with a separator, is used, and lithium salt or the like is used as the electrolyte to form a battery. In this battery, one surface of at least one electrode sheet of the positive electrode sheet and the negative electrode sheet is formed with the active material having a different charging and discharging characteristic from that of the other surface, for example, formed with a different kind of active material. As the active materials having a different charging and discharging characteristic form each other, the mixture of two or more kinds of active material, or the active material having a different mean specific surface area, or the active material having a different stored quantity of lithium ion are used. The positive electrode active material, which contains the transition metal compound, is desirable, and the negative electrode active material, which contains the carbonaceous material, especially, polyacrylonitrile carbon fiber, is desirable.

US20140141305A1 provides a wound electrode group, a positive electrode 10 includes positive electrode active material layers formed on both surfaces of a band-like positive electrode current collector, and a negative electrode includes negative electrode active material layers on both surfaces of a band-like negative electrode current collector. Charge capacity of the negative electrode falls within a range of 83-99% of theoretical capacity of the negative electrode in a full charge state of a nonaqueous electrolyte secondary battery. An active material mass M1 per unit area of a negative electrode active material layer formed on an outer circumference of the negative electrode current collector, and an active material mass M2 per unit area of a negative electrode active material layer formed on an inner circumference satisfy a relational expression of M1/M2<(R1+t/2)/(R1-t/2), where the electrode group has an innermost diameter of R1, and the negative electrode has a thickness of t.

EP2130263B1 provides a jelly-roll type electrode assembly ("jelly-roll") of a cathode/separator/anode structure, wherein the jelly-roll is constructed in a structure in which each electrode has active material layers formed on opposite major surfaces of a sheet-type current collector, the loading amount of an active material for the inner active material layer, constituting the inner surface of each sheet when each sheet is wound, is less than that of an active material for the outer active material layer, constituting the outer surface of each sheet when each sheet is wound, and the loading amount of the active material for the inner active material layer gradually increases from the central region of each wound sheet to the outermost region of each wound sheet.

### SUMMARY

The invention is set out in the appended set of claims.

### BRIEF DESCRIPTION OF DRAWINGS

In order to illustrate the technical solution in the embodiments of the present application more clearly, brief description will be made below to the drawings required in the embodiments of the present application, and apparently, the drawings described below are some embodiments of the present application only, and other drawings could be obtained based on these drawings by those ordinary skilled in this art without creative efforts.
FIG. 1 is a schematic structural diagram of a vehicle according to some embodiments of the present application;
FIG. 2 is an exploded view of a battery according to some embodiments of the present application;
FIG. 3 is a schematic structural diagram of a battery module shown in FIG. 2;
FIG. 4 is an exploded view of the battery cell shown in FIG. 3;
FIG. 5 is a schematic structural diagram of an electrode assembly according to some embodiments of the present application;
FIG. 6 is another schematic structural diagram of an electrode assembly according to some embodiments of the present application;
FIG. 7 is a partially enlarged view of the electrode assembly shown in FIG. 5;
FIG. 8 is a partially enlarged view of the part of the electrode assembly located in the bending area according to some embodiments of the present application;
FIG. 9 is a partially enlarged view of the part of the electrode assembly located in the bending area according to some more embodiments of the present application;
FIG. 10 is a partially enlarged view of the part of the electrode assembly located in the bending area according to some more embodiments of the present application;
FIG. 11 is a partially enlarged view of the part of the electrode assembly located in the bending area according to some more embodiments of the present application;
FIG. 12 is a partially enlarged view of the part of the electrode assembly located in the bending area according to some more embodiments of the present application;
FIG. 13 is a flowchart of an electrode assembly manufacturing method according to some embodiments of the present application; and
FIG. 14 is a schematic block diagram of an electrode assembly manufacturing device according to some embodiments of the present application.

In the drawings, the drawings are not drawn to actual scale.

Marking description: 10-box body; 11-first portion; 12-second portion; 13-accommodating space; 20-battery cell; 21-shell; 211-housing; 212-cover body; 213-sealing space; 214 -positive electrode terminal; 215-negative electrode terminal; 216-pressure relief mechanism; 22-electrode assembly; 220-negative electrode plate; 2201-negative electrode current collector; 2202-first negative active substance layer; 2203-second negative active substance layer; 221-positive electrode plate; 2211-positive electrode current collector; 2212-first positive active substance layer; 2213-second positive active substance layer; 222-separator; 223-bending portion; 224-first bending portion; 2241-first current collecting portion; 2241a-first inner surface; 2241b-first outer surface; 2242-first active substance portion; 2243-second active substance portion; 225-second bending portion; 2251-second current collecting portion; 2251a-second inner surface; 2251b-second outer surface; 2252-third active substance portion; 2253-fourth active substance portion; 226-third bending portion; 2261-third current collecting portion; 2261a-third inner surface; 2261b-third outer surface; 2262-fifth active substance portion; 2263-sixth active substance portion; 227-fourth bending portion; 2271-fourth current collecting portion; 2271a-fourth inner surface; 2271b-fourth outer surface; 2272-seventh active substance portion; 2273-eighth active substance portion; 228-first conductive portion; 229-second conductive portion; 30-battery module; 31-bus component; 100-battery; 200-controller; 300-motor; 1000-vehicle; 2000-manufacturing device; 2100-providing apparatus; 2200-assembly apparatus; A-winding direction; B-bending area; C-straight area.

### DESCRIPTION OF EMBODIMENTS

To make the objectives, technical solutions and advantages of the embodiments of the present application clearer, the following clearly describes the technical solutions in the embodiments of the present application with reference to the accompanying drawings in the embodiments of the present application. Apparently, the described embodiments are merely some but not all of the embodiments of the present application. All the other embodiments obtained by those of ordinary skill in the art based on the embodiments of the present application without any inventive effort can fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "including" and "having" and any variations thereof in the specification and the claims of the present application as well as the foregoing description of the accompanying drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiments" referred to in the present application means that the descriptions of specific features, structures, and characteristics in combination with the embodiments are included in at least an embodiment of the present application. The phrase at various locations in the specification does not necessarily refer to the same embodiment, or an independent or alternative embodiment exclusive of another embodiment.

In the description of the present application, it should be noted that unless otherwise explicitly specified and defined, the terms "mounting", "connecting", "connection" and "attaching" should be understood in a broad sense, for example, they can be a fixed connection, a detachable connection, or an integrated connection; can be a direct connection and can also be an indirect connection via an intermediate medium, or can be communication between the interiors of two elements. Those of ordinary skill in the art can appreciate the specific meanings of the foregoing terms in the present application according to specific circumstances.

In the present application, the term "and/or" is only an association relation describing associated objects, which means that there can be three relations. For example, A and/or B can represent three situations: A exists alone, both A and B exist, and B exists alone. In addition, the character "/" in the present application generally indicates that the associated objects before and after the character are in an "or" relation.

In the embodiments of the present application, same components are denoted by same reference numerals, and detailed description of the same components is omitted in different embodiments for brevity. It should be understood that dimensions such as thicknesses, lengths and widths of various components in embodiments of the present application shown in the drawings, as well as dimensions of the overall thickness, length and width of an integrated apparatus are merely illustrative, and should not constitute any limitation to the present application.

In the present application, "a plurality of" means two or more (including two).

In the present application, battery cells can include lithium-ion secondary batteries, lithium-ion primary batteries, lithium-sulfur batteries, sodium/lithium-ion batteries, sodium-ion batteries or magnesium-ion batteries, etc., which are not limited by the embodiments of the present application. The battery cells can be cylindrical, flat, cuboid or in another shape, which is not limited by the embodiments of the present application. The battery cell is generally divided into three types according to the way of packaging: a cylindrical battery cell, a square battery cell and a soft package battery cell, which is also not limited in the embodiments of the present application.

Currently, the most commonly used batteries in vehicles are lithium-ion batteries. As a kind of rechargeable battery, lithium-ion batteries have the advantages such as small size, high energy density, high power density, multiple cycles of use, and long storage time.

The battery mentioned in the embodiment of the present application refers to a single physical module that includes one or more battery cells to provide a higher voltage and capacity. For example, the battery mentioned in the present application can include a battery module or a battery pack. The battery generally includes a box body for enclosing one or more battery cells. The box body can prevent liquid or other foreign matters from affecting the charging or discharging of the battery cells.

The battery cells includes an electrode assembly and an electrolytic solution, and the electrode assembly is composed of a positive electrode plate, a negative electrode plate and a separator. The operation of the battery cells mainly relies on the movement of metal ions between the positive electrode plate and the negative electrode plate. The positive electrode plate includes a positive electrode current collector and a positive active substance layer. The positive active substance layer is coated on a surface positive of the positive electrode current collector, and the current collector not coated with the positive active substance layer protrudes from the positive electrode current collector coated with the positive active substance layer and is used as a positive electrode tab. As an example, in a lithium-ion battery, the material of the positive electrode current collector can be aluminum, and the positive electrode active substance can be lithium cobalt oxides, lithium iron phosphate, ternary lithium or lithium manganate, etc. The negative electrode plate includes a negative electrode current collector and a negative active substance layer. The negative active substance layer is coated on a surface of the negative electrode current collector, and the negative electrode current collector not coated with the negative active substance layer protrudes from the negative electrode current collector coated with the negative active substance layer and is used as a negative electrode tab. The material of the negative electrode current collector can be copper, and the negative active substance can be carbon or silicon, etc. In order to ensure that no fusing occurs when a large current passes through, there are a plurality of positive electrode tabs which are stacked together, and there are a plurality of negative electrode tabs which are stacked together. A material of the separator can be polypropylene (PP) or polyethylene (PE), etc. In addition, the electrode assembly can be a winding structure or a laminated structure, and the embodiments of the present application are not limited thereto.

For general electrode assemblies, arrangement of active substances in the electrode plates is unreasonable and the economy is poor.

The inventor finds that a thickness of the active substance layer inside the negative electrode plate in the electrode assembly and a thickness of the active substance layer outside the negative electrode plate have an equal thickness, a material of the active substance layer inside the negative electrode plate is equal to a material of the outside active substance layer, a thickness of the active substance layer inside the positive electrode plate and a thickness of the active substance layer outside the positive electrode plate have an equal thickness, a material of the active substance layer inside the positive electrode plate is equal to an active material of the outside active substance layer; in the bending area of the electrode assembly, a radius of the active substance layer inside the negative electrode plate is greater than a radius of the active substance layer outside the positive electrode plate located inside the negative electrode plate, and a radius of the active substance layer outside the negative electrode plate can be smaller than a radius of the active substance layer inside the positive electrode plate outside the negative electrode plate, so that it can occur that the active substance of the negative electrode plate inside the bending portion in the bending area is excessive and the outside active substance is insufficient. Similarly, it will also occur that the active substance of the positive electrode plate inside the bending portion in the bending area is insufficient and the inside active substance is excessive. In the electrode assembly of this structure, the arrangement of active substances in the electrode plates is unreasonable and the economy is poor.

In view of this, an embodiment of the present application provides a technical solution. The negative electrode plate includes a first bending portion located in the bending area, an active substance capacity per unit area outside the first bending portion is greater than an active substance capacity per unit area inside the first bending portion; and/or, the positive electrode plate includes a second bending portion located in the bending area, and an active substance capacity per unit area outside the second bending portion is greater than an active substance capacity per unit area inside the second bending portion. This structure makes the arrangement of active substances in at least part area of the bending area of the electrode plate more reasonable and the economy better.

The technical solution described in the embodiment of the present application is applicable to a battery and a power consumption device using the battery.

The power consumption device can be vehicles, mobile phones, portable devices, notebook computers, ships, spacecraft, electric toys, electric tools, etc. The vehicle can be fuel vehicles, gas vehicles or new energy vehicles; new energy vehicles can be pure electric vehicles, hybrid vehicles or extended range vehicles, etc; the spacecrafts include airplanes, rockets, space shuttles and spaceships, etc.; the electric toys include fixed or mobile electric toys, such as game consoles, electric vehicle toys, electric ship toys and electric airplane toys, etc.; the electric tools include metal cutting power tools, grinding power tools, assembly power tools and railway power tools, such as electric drills, electric grinders, electric wrenches, electric screwdrivers, electric hammers, impact drills, concrete vibrators, and electric planers, etc. The embodiment of the present application does not impose special restrictions on the above power consumption devices.

For the convenience of description, the following embodiments take a vehicle as an example of the power consumption device for description.

In the following specific embodiments are described. Several features of those embodiments are described as being optional (as indicated by terms like "may", "can" etc.). In this regard it is noted that the scope of the present invention is different and is as defined in the appended claims.

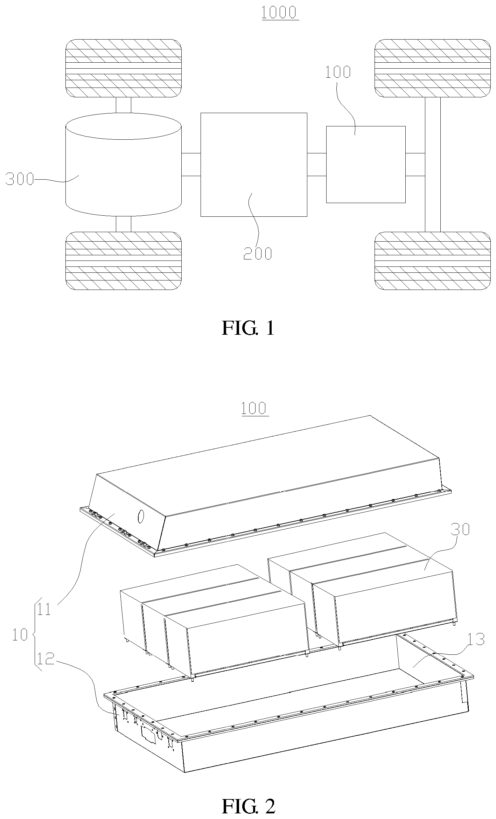

Please refer to FIG. 1. FIG. 1 is a schematic structural diagram of a vehicle 1000 provided by some embodiments of the present application. A battery 100 is provided inside the vehicle 1000, and the battery 100 can be provided at the bottom, head, or tail of the vehicle 1000. The battery 100 can be used for power supply of the vehicle 1000, for example, the battery 100 can be used as an operating power source of the vehicle 1000.

The vehicle 1000 can further include a controller 200 and a motor 300. The controller 200 is used to control the battery 100 to supply power to the motor 300, for example, for working power requirements during starting, navigating, and driving of the vehicle 1000.

In some embodiments of the present application, the battery 100 can serve not only as an operation power source of the vehicle 1000, but also as a driving power source of the vehicle 1000, replacing or partially replacing fuel or natural gas to provide driving power for the vehicle 1000.

Please refer to FIG. 2. FIG. 2 is an exploded view of a battery 100 provided by some embodiments of the present application. The battery 100 includes a box body 10 and a battery cell 20 (not shown in FIG. 2), and the battery cell 20 is accommodated in the box body 10.

The box body 10 is used for accommodating the battery cell 20, and the box body 10 can have various structures. In some embodiments, the box body 10 can include a first portion 11 and a second portion 12, the first portion 11 and the second portion 12 are mutually covered, and the first portion 11 and the second portion 12 together define an accommodating space 13 for accommodating the battery cell 20. It can be that the second portion 12 is a hollow structure with one end open, the first portion 11 is a plate-shaped structure, and the first portion 11 covers the opening side of the second portion 12 to form a box body 10 with the accommodating space 13; both the first portion 11 and the second portion 12 can also be hollow structures with one side open, and the opening side of the first portion 11 covers the opening side of the second portion 12 to form a box body 10 with the accommodating space 13. Of course, the first portion 11 and the second portion 12 can have various shapes, such as a cylinder, a cuboid, etc.

In order to improve the sealing performance after the first portion 11 and the second portion 12 are connected, a sealing element, such as a sealant, a sealing ring, etc., can also be provided between the first portion 11 and the second portion 12.

Assuming that the first portion 11 covers the top of the second portion 12, the first portion 11 can also be referred to as an upper cover, and the second portion 12 can also be referred to as a lower box body.

In the battery 100, there can be one or more battery cells 20. If there are a plurality of battery cells 20, the plurality of battery cells 20 can be connected in series or in parallel or in hybrid. The hybrid connection means that the connections of the plurality of battery cells 20 include both series connection and parallel connection. The plurality of battery cells 20 can be directly connected in series or in parallel or in hybrid, and then a whole formed by the plurality of battery cells 20 can be accommodated in the box body 10; of course, the plurality of battery cells 20 can also be first connected in series, or in parallel or in hybrid to form a battery module 30; then a plurality of battery modules 30 are connected in series or in parallel or in hybrid to form as a whole, and are accommodated in the box body 10.

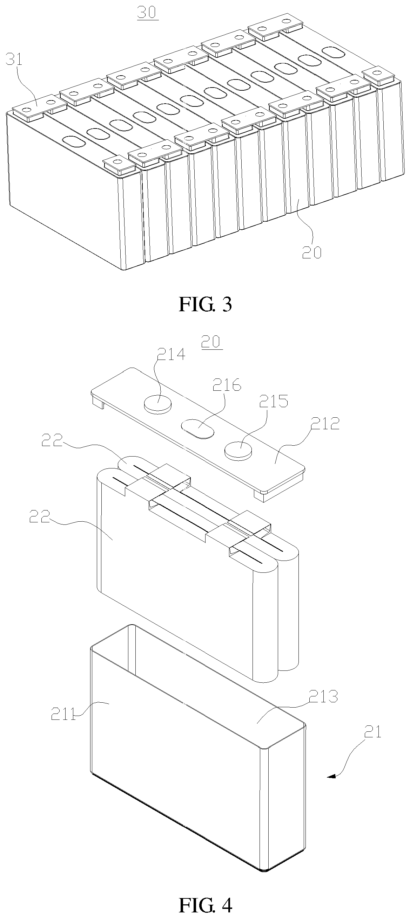

In some embodiments, please refer to FIG. 3. FIG. 3 is a schematic structural diagram of a battery module 30 shown in FIG. 2. There are a plurality of battery cells 20. The plurality of battery cells 20 are first connected in series, or in parallel or in hybrid to form the battery module 30. A plurality of battery modules 30 are then connected in series or in parallel or in hybrid to form as a whole, and are accommodated in the box body 10.

A plurality of battery cells 20 in the battery module 30 can be electrically connected through a bus component 31 to realize the connection of the plurality of battery cells 20 in the battery module 30 in series, or in parallel or in hybrid.

Please refer to FIG. 4. FIG. 4 is an exploded view of the battery cell 20 shown in FIG. 3. The battery cell 20 provided by the embodiment of the present application includes a shell 21 and an electrode assembly 22, and the electrode assembly 22 is accommodated in the shell 21.

In some embodiments, the shell 21 can also be used to accommodate an electrolyte, such as an electrolytic solution. The shell 21 can have various structural forms.

In some embodiments, the shell 21 can include a housing 211 and a cover body 212. The housing 211 is a hollow structure with one side open. The cover body 212 covers the opening of the housing 211 and forms a sealed connection, to form a sealing space 213 for accommodating the electrode assembly 22 and the electrolyte.

When the battery cell 20 is assembled, the electrode assembly 22 can be first put into the housing 211, the housing 211 is filled with the electrolyte, and then the cover body 212 covers the opening of the housing 211.

The housing 211 can have various shapes, such as a cylinder, a cuboid, etc. The shape of the housing 211 can be determined according to a specific shape of the electrode assembly 22. For example, if the electrode assembly 22 has a cylindrical structure, a cylindrical housing 211 can be selected; if the electrode assembly 22 has a cuboid structure, a cuboid housing 211 can be selected. Of course, the cover body 212 can also have various structures, for example, the cover body 212 has a plate-shaped structure, a hollow structure with one end open, etc. Illustratively, in FIG. 4, the housing 211 has a cuboid structure, the cover body 212 has a plate-shaped structure, and the cover body 212 covers the opening at the top of the housing 211.

In some embodiments, the battery cell 20 can further include a positive electrode terminal 214, a negative electrode terminal 215 and a pressure relief mechanism 216. The positive electrode terminal 214, the negative electrode terminal 215 and the pressure relief mechanism 216 are all mounted on the cover body 212. Both the positive electrode terminal 214 and the negative electrode terminal 215 are used for electrical connection with the electrode assembly 22, to output electric energy generated by the electrode assembly 22. The pressure relief mechanism 216 can be used for relieving an internal pressure of the battery cell 20 when the internal pressure or temperature of the battery cell 20 reaches a predetermined value.

Illustratively, the pressure relief mechanism 216 is located between the positive electrode terminal 214 and the negative electrode terminal 215, and the pressure relief mechanism 216 can be a component such as an explosion-proof valve, a rupture disk, a gas valve, a pressure relief valve, or a safety valve.

Of course, in some embodiments, the shell 21 can also have other structures. For example, the shell 21 includes a housing 211 and two cover bodies 212. The housing 211 is a hollow structure with openings at two opposite sides. One cover body 212 correspondingly covers an opening of the housing 211 and forms a sealed connection to form a sealing space 213 for accommodating the electrode assembly 22 and the electrolyte. In this structure, the positive electrode terminal 214 and the negative electrode terminal 215 can be installed on the same cover body 212, or on different cover bodies 212; it can be that one cover body 212 is installed with a pressure relief mechanism 216, and it can also be that both two cover bodies 212 are installed with a pressure relief mechanism 216.

It should be noted that in the battery cell 20, there can be one or more electrode assemblies 22 accommodated in the shell 21. Illustratively, in FIG. 4, there are two electrode assemblies 22.

Next, the specific structure of the electrode assembly 22 will be described in detail with reference to the drawings.

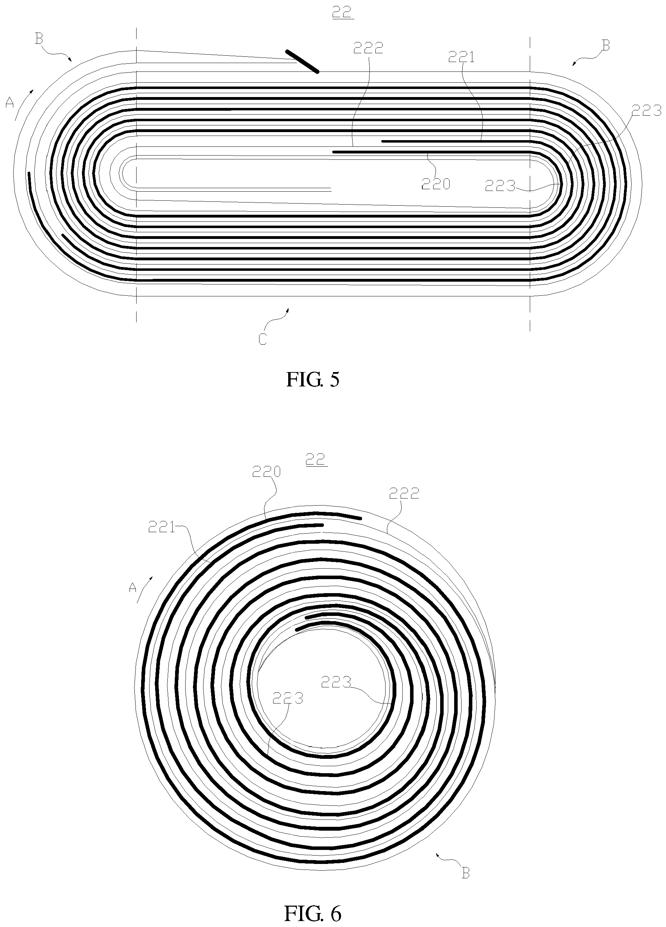

Please refer to FIG. 5. FIG. 5 is a schematic structural diagram of an electrode assembly 22 according to some embodiments of the present application. The electrode assembly 22 includes a negative electrode plate 220 and a positive electrode plate 221. The negative electrode plate 220 and the positive electrode plate 221 are wound along a winding direction A to form a winding structure. The winding structure includes a bending area B. Both the negative electrode plate 220 and the positive electrode plate 221 includes a plurality of bending portions 223 located in the bending area B.

Among that, at least one bending portion 223 in the negative electrode plate 220 is a first bending portion 224 (not shown in FIG. 5), and an active substance capacity per unit area outside the first bending portion 224 is greater than an active substance capacity per unit area inside the first bending portion 224; and/or, at least one bending portion 223 in the positive electrode plate 221 is a second bending portion 225 (not shown in FIG. 5), and an active substance capacity per unit area outside the second bending portion 225 is greater than an active substance capacity per unit area inside the second bending portion 225.

If the active substance capacity per unit area outside the first bending portion 224 of the negative electrode plate 220 is greater than the active substance capacity per unit area inside the first bending portion 224, it is unlikely to occur that the active substance inside the first bending portion 224 is excessive while the active substance outside the first bending portion 224 is insufficiency, thus making the arrangement of active substances in at least part area of the negative electrode plate 220 (the area where the first bending portion 224 is located) more reasonable. If the active substance capacity per unit area outside the second bending portion 225 of the positive electrode plate 221 is greater than the active substance capacity per unit area inside the second bending portion 225, it is unlikely to occur that the active substance outside the second bending portion 225 is insufficient while the active substance inside the second bending portion 225 is excessive, thus making the active substance arrangement in at least part area of the positive electrode plate 221 (the area where the second bending portion 225 is located) more reasonable. In the electrode assembly 22 of this structure, the arrangement of active substances in at least part area of the electrode plate is more reasonable with better economy.

In addition, when the active substance capacity per unit area inside the first bending portion 224 meets the design requirements, that is, the active substance capacity per unit area inside the first bending portion 224 reaches a first preset value, lithium plating is hard to occur in the inside part of the first bending portion 224; since the active substance capacity per unit area outside the first bending portion 224 is greater than the active substance capacity per unit area inside the first bending portion 224, it is equivalent to increasing the active substance capacity per unit area outside the first bending portion 224 relative to the first preset value, so that a CB value of the outside part of the first bending portion 224 can increase, and lithium plating is hard to occur in the outside part of the first bending portion 224. Similarly, when the active substance capacity per unit area outside the second bending portion 225 meets the design requirements, that is, the active substance capacity per unit area outside the second bending portion 225 reaches a second preset value, lithium plating is hard to occur in the inside part of the bending portion 223 of the negative electrode plate 220 located outside the second bending portion 225; since the active substance capacity per unit area outside the second bending portion 225 is greater than the active substance capacity per unit area inside the second bending portion 225, it is equivalent to reducing the active substance capacity per unit area inside the second bending portion 225 relative to the second preset value, so that lithium plating is hard to occur in the outside part of the bending portion 223 of the negative electrode plate 220 located inside the second bending portion 225 either.

A CB (Cell Balance) value is a ratio of a negative active substance capacity per unit area to a positive active substance capacity per unit area. The CB (Cell Balance) value of the outside part of the bending portion 223 of the negative electrode plate 220 = Q1/Q2, where the active substance capacity per unit area of the active substance outside one bending portion 223 in the negative electrode plate 220 is Q1. the active substance capacity per unit area of the active substance inside a bending portion 223 in the positive electrode plate 221 is Q2, the bending portion 223 is adjacent to the one bending portion 223 and located outside the one bending portion 223.

In the embodiment of the present application, the winding direction A is the direction in which the positive electrode plate 221 and the negative electrode plate 220 are wound from the inside to the outside. In FIG. 5, the winding direction A is the clockwise direction.

In some embodiments, the electrode assembly 22 can further include a separator 222, the separator 222 is used to separate the positive electrode plate 221 and the negative electrode plate 220, so as to reduce the risk of a short circuit between the positive electrode plate 221 and the negative electrode plate 220.

A material of the separator 222 can be PP (polypropylene) or PE (polyethylene), etc.

In some embodiments, as shown in FIG. 5, the winding structure further includes a straight area C, and the straight area C is connected to the bending area B. Both the opposite ends of the straight area C can be provided with the bending area B. The straight area C is an area where the winding structure has a straight structure. A part of the straight area C in which the positive electrode plate 221 is located and a part of the straight area C where the negative electrode plate 220 is located are both arranged substantially straight. The bending area B is an area where the winding structure has a bending structure. A part of the bending area B in which the positive electrode plate 221 is located (the bending portion 223) and a part of the bending area B in which the negative electrode plate 220 is located (the bending portion 223) are both distributed in a bending manner. Illustratively, the bending portion 223 of the positive electrode plate 221 and the bending portion 223 of the negative electrode plate 220 are both at least partially arc-shaped.

In the present embodiment, the winding structure includes a straight area C and a bending area B, and the electrode assembly is a flat body as a whole.

It should be noted that, when the first bending portion 224 is arranged in the bending area B, there can be only one bending area B arranged with the first bending portion 224, or two bending areas B are both arranged with the first bending portion 224. When the second bending portion 225 is arranged in the bending area B, there can be only one bending area B arranged with the second bending portion 225, or two bending areas B both arranged with the second bending portion 225.

Illustratively, as shown in FIG. 5, in the bending area B, a plurality of bending portions 223 in the positive electrode plate 221 and a plurality of bending portions 223 in the negative electrode plate 220 are arranged in a staggered manner, that is, in the bending area B, the bending portions 223 are arranged successively in the order of one bending portion 223 of the negative electrode plate 220, one bending portion 223 of the positive electrode plate 221, one bending portion 223 of the negative electrode plate 220, ...

In other embodiments, please refer to FIG. 6. FIG. 6 is another schematic structural diagram of an electrode assembly 22 according to some embodiments of the present application. There can be only the bending area B in the winding structure can, but no straight area C. The electrode assembly 22 of this structure can be a cylinder as a whole. In the positive electrode plate 221, a circle of electrode plate of the positive electrode plate 221 is one bending portion 223; and in the negative electrode plate 220, a circle of electrode plate of the negative electrode plate 220 is one bending portion 223.

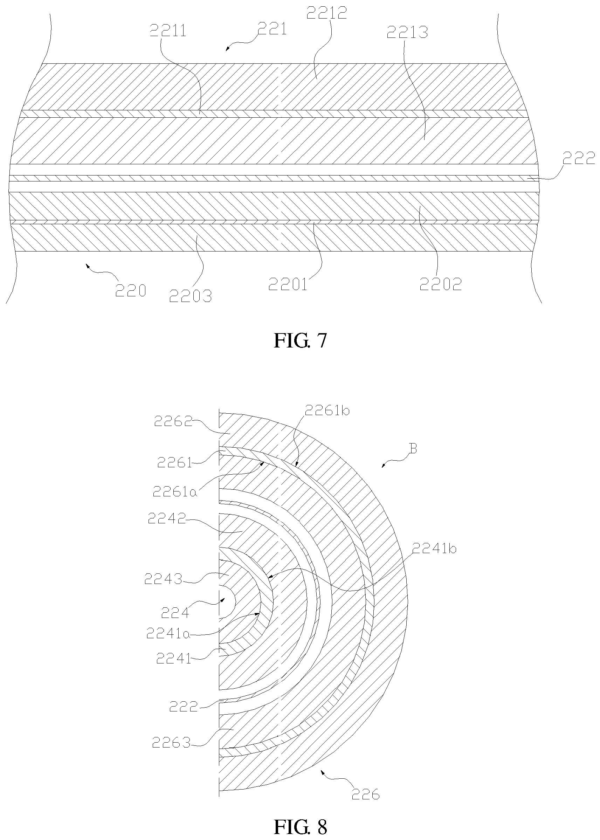

In some embodiments, please refer to FIG. 7. FIG. 7 is a partially enlarged view of the electrode assembly 22 shown in FIG. 5. The negative electrode plate 220 includes a negative electrode current collector 2201 and negative active substance layers provided on both sides in a thickness direction of the negative electrode current collector 2201; the negative active substance layers on both sides in the thickness direction of the negative electrode current collector 2201 are a first negative active substance layer 2202 and a second negative active substance layer 2203, respectively. The first negative active substance layer 2202 is provided on an outer surface of the negative electrode current collector 2201. The second negative active substance layer 2203 is provided on an inner surface of the negative electrode current collector 2201. The positive electrode plate 221 includes a positive electrode current collector 2211 and positive active substance layers disposed on both sides in the thickness direction of the positive electrode current collector 2211. The positive active substance layers on both sides in the thickness direction of the positive electrode current collector 2211 are the first positive active substance 2212 and the second positive active substance layer 2213, respectively. The first positive active substance layer 2212 is provided on the outer surface of the positive electrode current collector 2211, and the second positive active substance layer 2213 is provided on the inner surface of the positive electrode current collector 2211.

Among that, the negative electrode current collector 2201 can have a part that is not coated with the negative active substance layer, and the part is a negative electrode tab (not shown in the figure); and the positive electrode current collector 2211 can have a part that is not coated with the positive active substance layer, and the part is a positive electrode tab (not shown in the figure). The positive electrode tab is used for electrical connection with the positive electrode terminal 214 (refer to FIG. 4), and the negative electrode tab is used for electrical connection with the negative electrode terminal 215 (refer to FIG. 4).

**In** some embodiments, in the negative electrode plate 220, each negative active substance layer is distributed on the negative electrode current collector 2201 with an equal thickness along the winding direction A, that is, the first negative active substance layer 2202 is distributed on the negative electrode current collector 2201 with an equal thickness along the winding direction A, and the second negative active substance layer 2203 is distributed on the negative electrode current collector 2201 with an equal thickness along the winding direction A. This structure can simplify the manufacturing process of the negative electrode plate 220, which is beneficial to reduce the production cost.

It is understandable that a thickness of each layer of the first negative active substance layer 2202 located in the bending area B is equal to a thickness of each layer of the first negative active substance layer 2202 located in the straight area C; and a thickness of each layer of the second negative active substance layer 2203 located in the bending area B is equal to a thickness of each layer of the second negative active substance layer 2203 located in the straight area C.

In some embodiments, in the positive electrode plate 221, each positive active substance layer is distributed on the positive electrode current collector 2211 with an equal thickness along the winding direction A, that is, the first positive active substance layer 2212 is distributed on the positive electrode current collector 2211 with an equal thickness along the winding direction A. The second positive active substance layer 2213 is distributed on the positive electrode current collector 2211 with an equal thickness along the winding direction A. This structure can simplify the manufacturing process of the positive electrode plate 221, which is beneficial to reduce the production cost.

It is understandable that a thickness of each layer of the first positive active substance layer 2212 located in the bending area B is equal to a thickness of each layer of the first positive active substance layer 2212 located in the straight area C; and a thickness of each layer of the second positive active substance layer 2213 located in the bending area B is equal to a thickness of each layer of the second positive active substance layer 2213 located in the straight area C.

In some embodiments, please refer to FIG. 8. FIG. 8 is a partially enlarged view of the part of the electrode assembly 22 located in the bending area B according to some embodiments of the present application. At least one bending portion 223 of the negative electrode plate 220 is the first bending portion 224, and the active substance capacity per unit area outside the first bending portion 224 of the negative electrode plate 220 is greater than the active substance capacity per unit area inside the first bending portion 224. A bending portion 223 adjacent to the first bending portion 224 in the positive electrode plate 221 is a third bending portion 226; and an active substance capacity per unit area outside the third bending portion 226 is equal to an active substance capacity per unit area inside the third bending portion 226.

When the active substance capacity per unit area outside the first bending portion 224 is greater than the active substance capacity per unit area inside the first bending portion 224, the active substance capacity per unit area outside the third bending portion 226 can be equal to the active substance capacity per unit area inside the third bending portion 226, to simplify the manufacturing process of the positive electrode plate 221.

Among that, the first bending portion 224 includes a first current collecting portion 2241, a first active substance portion 2242, and a second active substance portion 2243. The first current collecting portion 2241 has a first inner surface 2241a and a first outer surface 2241b arranged oppositely in its thickness direction, the first active substance portion 2242 is provided on the first outer surface 2241b, and the second active substance portion 2243 is provided on the first inner surface 2241a. The third bending portion 226 includes a third current collecting portion 2261, a fifth active substance portion 2262, and a sixth active substance portion 2263. The third current collecting portion 2261 has a third inner surface 2261a and a third outer surface 2261b arranged oppositely in its thickness direction, the fifth active substance portion 2262 is provided on the third outer surface 2261b, and the sixth active substance portion 2263 is provided on the third inner surface 2261a.

It is understandable that the first current collecting portion 2241 is a layer of the negative electrode current collector 2201 (refer to FIG. 7) in the bending area B; the first active substance portion 2242 is a layer of the first negative active substance layer 2202 (refer to FIG. 7) in the bending area B; and the second active substance portion 2243 is a layer of the second negative active substance layer 2203 (refer to FIG. 7) in the bending area B. The third current collecting portion 2261 is a layer of the positive electrode current collector 2211 (refer to FIG. 7) in the bending area B; the fifth active substance portion 2262 is the first positive active substance layer 2212 (refer to FIG. 7) in the bending area B; and the sixth active substance portion 2263 is a layer of the second positive active substance layer 2213 (refer to FIG. 7) in the bending area B.

When the active substance capacity per unit area outside the first bending portion 224 is greater than the active substance capacity per unit area inside the first bending portion 224, that is, the active substance capacity per unit area of the first active substance portion 2242 (the outside part of the first bending portion 224) is greater than the active substance capacity per unit area of the second active substance portion 2243 (the inside part of the first bending portion 224). The active substance capacity per unit area outside the first bending portion 224 is a ratio of the active material capacity of the first active substance portion 2242 to an area of the first outer surface 2241b, and the active substance capacity per unit area inside the first bending portion 224 is a ratio of the active material capacity of the second active substance portion 2243 to an area of the first inner surface 2241a.

The active substance capacity per unit area outside the third bending portion 226 is equal to the active substance capacity per unit area inside the third bending portion 226, that is, the active substance capacity per unit area of the fifth active substance portion 2262 (the outside part of the third bending portion 226) is equal to the active substance capacity per unit area of the sixth active substance portion 2263 (the inside part of the third bending portion 226). The active substance capacity per unit area outside the third bending portion 226 is a ratio of the active material capacity of the fifth active substance portion 2262 to an area of the third outer surface 2261b, and the active substance capacity per unit area inside the third bending portion 226 is a ratio of the active material capacity of the sixth active substance portion 2263 to the third inner surface 2261a.

In the negative electrode plate 220, all bending portions 223 can be the first bending portions 224, or part of bending portions 223 can be the first bending portions 224. If all the bending portions 223 in the negative electrode plate 220 are the first bending portions 224, the active substance capacity per unit area outside each bending portion 223 of all the bending portions 223 in the negative electrode plate 220 is greater than the inside active substance capacity per unit area. If only part of the bending portions 223 of the negative electrode plate 220 is the first bending portion 224, all the bending portions 223 of the negative electrode plate 220 other than the first bending portion 224 can use a structure that the outside active substance capacity per unit area is equal to the inside active substance capacity per unit area. In the positive electrode plate 221, all bending portions 223 can be the third bending portions 226, or only part of bending portions 223 can be the third bending portions 226.

In some embodiments, part of the bending portions 223 in the negative electrode plate 220 is the first bending portion 224, and all the bending portions 223 in the positive electrode plate 221 are the third bending portions 226.

Among that, one or more bending portions 223 in the negative electrode plate 220 that are at the innermost side of the bending area B are the first bending portions 224. Illustratively, the two innermost bending portions 223 in the negative electrode plate 220 are the first bending portions 224.

In some embodiments, all the bending portions 223 in the negative electrode plate 220 are the first bending portion 224, and all the bending portions 223 in the positive electrode plate 221 are the third bending portions 226.

In the present embodiment, in the negative electrode plate 220, each negative active substance layer can be distributed on the negative electrode current collector 2201 with an equal thickness along the winding direction A; and in the positive electrode plate 221, each positive active substance layer can be distributed on the positive electrode current collector 2211 with an equal thickness along the winding direction A.

In the embodiment of the present application, the active substance capacity per unit area outside the first bending portion 224 is greater than the active substance capacity per unit area inside the first bending portion 224, which can be realized in various ways.

In some embodiments, please continue to refer to FIG. 8; a material of the first active substance portion 2242 in the first bending portion 224 is the same as a material of the second active substance portion 2243; and a thickness of the first active substance portion 2242 is greater than a thickness of the second active substance portion 2243.

When the material of the first active substance portion 2242 is the same as the material of the second active substance portion 2243, the thickness of the first active substance portion 2242 is greater than the thickness of the second active substance portion 2243. In this way, the active substance capacity per unit area of the first active substance portion 2242 is greater than the active substance capacity per unit area of the second active substance portion 2243, so that the active substance capacity per unit area outside the first bending portion 224 is greater than the active substance capacity per unit area inside the first bending portion 224.

It should be noted that the material of the first active substance portion 2242 is the same as the material of the second active substance portion 2243, that is, the first inner surface 2241a and the first outer surface 2241b of the first current collecting portion 2241 are coated with the same active substance portion. It is understandable that components of the first active substance portion 2242 are the same as components of the second active substance portion 2243, and a proportion of each component of the first active substance portion 2242 is the same as a proportion of each component of the second active substance portion 2243. For example, both the first active substance portion 2242 and the second active substance portion 2243 include an active material, a conductive agent, and a bonding agent; a proportion of the active material in the first active substance portion 2242 is the same as a proportion of the active material in the second active substance portion 2243; a proportion of the conductive agent of the first active substance portion 2242 is the same as a proportion of the conductive agent of the second active substance portion 2243; and a proportion of the bonding agent of the first active substance portion 2242 is the same as a proportion of the bonding agent of the second active substance portion 2243.

Optionally, the thickness of the first active substance portion 2242 is greater than the thickness of the second active substance portion 2243 by 0.5%-20%.

Illustratively, the thickness of the first active substance portion 2242 is greater than the thickness of the second active substance portion 2243 by 1.5%-12%.

If one or more bending portions 223 of the negative electrode plate 220 that are at the innermost side of the bending area B are the first bending portions 224; and a thickness of the first negative active substance layer 2202 of one or more innermost circles of the negative electrode plate 220 is greater than a thickness of the second negative active substance layer 2203. Take an example that the two bending portions 223 of the negative electrode plate 220 at the innermost side of the bending area B are the first bending portions 224. A thickness of the first negative active substance layer 2202 at the innermost two circles of the negative electrode plate 220 can be greater than a thickness of the second negative active substance layer 2203, so that the thickness of the first active substance portion 2242 of the first bending portion 224 is greater than the thickness of the second active substance portion 2243. In this way, lithium plating is hard to occur in the first bending portion 224s of the first two innermost circles of the negative electrode plate 220, which can improve the safety of the battery cell 20, but also reduce the production cost.

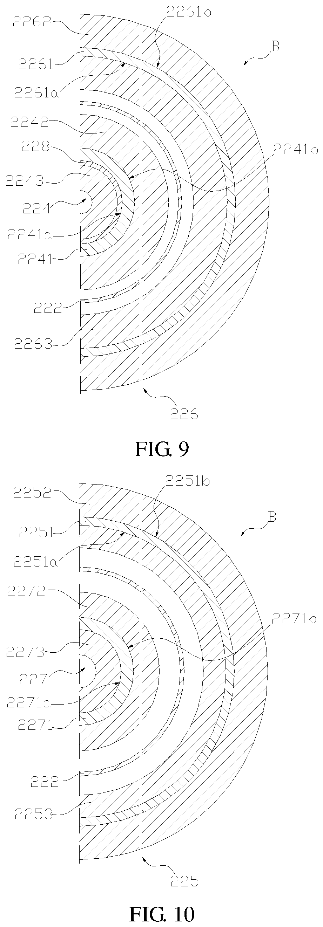

In some embodiments, please refer to FIG. 9. FIG. 9 is a partially enlarged view of the part of the electrode assembly 22 located in the bending area B according to some more embodiments of the present application. The first bending portion 224 further includes a first conductive portion 228, the first conductive portion 228 is connected between the second active substance portion 2243 and the first inner surface 2241a of the first current collecting portion 2241, and a thickness of the first active substance portion 2242 is equal to or greater than a total thickness of the second active substance portion 2243 and the first conductive portion 228. That is, by providing the first conductive portion 228 between the second active substance portion 2243 and the first current collecting portion 2241, the thickness of the first active substance portion 2242 is equal to or greater than the total thickness of the second active substance portion 2243 and the first conductive portion 228, so that the thickness of the first active substance portion 2242 is greater than the thickness of the second active substance portion 2243.

When the negative electrode plate 220 is produced, it only requires that the thickness of the first active substance portion 2242 is equal to or greater than the total thickness of the second active substance portion 2243 and the first conductive portion 228, so that the thickness of the first active substance portion 2242 is greater than the thickness of the second active substance portion 2243.

Among that, the first conductive portion 228 can be a pure conductive coating, for example, the first conductive portion 228 is a pure conductive coating composed of a bonding agent and a conductive agent; the first conductive portion 228 can also be an active coating containing lithium ion, for example, the first conductive portion 228 is an active coating containing lithium ions composed of a lithium-rich material, a bonding agent and a conductive agent; the first conductive portion 228 can also be an inactive coating containing lithium ions, for example, the first conductive portion 228 is an inactive coating containing lithium ions composed of a bonding agent, a conductive agent, and lithium powder coated with lithium carbonate.

It should be noted that in other embodiments, the second active substance portion 2243 can also be connected between the first conductive portion 228 and the first inner surface 2241a of the first current collecting portion 2241, and the thickness of the first active substance portion 2242 is equal to or greater than the total thickness of the second active substance portion 2243 and the first conductive portion 228.

In some embodiments, the active substance capacity per unit area outside the first bending portion 224 is greater than the active substance capacity per unit area inside the first bending portion 224, which can also be realized in other ways. For example, the thickness of the first active substance portion 2242 is equal to the thickness of the second active substance portion 2243, and a gram capacity of the active material in the first active substance portion 2242 is greater than a gram capacity of the active material in the second active substance portion 2243, so as to realize the active substance capacity per unit area outside the first bending portion 224 is greater than the active substance capacity per unit area inside the first bending portion 224.

The gram capacity refers to a ratio of an electric capacity released by the active material to a mass of the active material.

In the present embodiment, an active material of the first active substance portion 2242 is different from an active material of the second active substance portion 2243. For example, the active material of the first active substance portion 2242 is silicon, and the active material of the second active substance portion 2243 is graphite.

Optionally, the gram capacity of the active material in the first active substance portion 2242 is greater than the gram capacity of the active material in the second active substance portion 2243 by 0.5%-20%.

Illustratively, the gram capacity of the active material in the first active substance portion 2242 is greater than the gram capacity of the active material in the second active substance portion 2243 by 1.5%-12%.

In other embodiments, the active substance capacity per unit area outside the first bending portion 224 can be greater than the active substance capacity per unit area inside the first bending portion 224, which can also be realized in other ways. For example, the thickness of the first active substance portion 2242 is equal to the thickness of the second active substance portion 2243, the active material in the first active substance portion 2242 is the same as the active material in the second active substance portion 2243, and a proportion of the active material in the first active substance portion 2242 is greater than a proportion of the active material in the second active substance portion 2243.

It should be noted that, in the embodiment of the present application, the active substance capacity per unit area outside the third bending portion 226 is equal to the active substance capacity per unit area inside the third bending portion 226, which can also be realized in various ways. A material of the fifth active substance portion 2262 in the third bending portion 226 is the same as a material of the sixth active substance portion 2263, and a thickness of the fifth active substance portion 2262 is equal to a thickness of the sixth active substance portion 2263.

In some embodiments, please refer to FIG. 10. FIG. 10 is a partially enlarged view of the part of the electrode assembly 22 located in the bending area B according to some embodiments of the present application. At least one bending portion 223 of the positive electrode plate 221 is the second bending portion 225, and the active substance capacity per unit area outside the second bending portion 225 is greater than the active substance capacity per unit area inside the second bending portion 225. A bending portion 223 in the negative electrode plate 220 adjacent to the second bending portion 225 is a fourth bending portion 227; and an active substance capacity per unit area outside the fourth bending portion 227 is equal to an active substance capacity per unit area inside the fourth bending portion 227.

When the active substance capacity per unit area outside the second bending portion 225 is greater than the active substance capacity per unit area inside the second bending portion 225, the active substance capacity per unit area outside the fourth bending portion 227 can be equal to the active substance capacity per unit area inside the fourth bending portion 227, to simplify the manufacturing process of the negative electrode plate 220.

Among that, the second bending portion 225 includes a second current collecting portion 2251, a third active substance portion 2252, and a fourth active substance portion 2253. The second current collecting portion 2251 has a second inner surface 2251a and a second outer surface 2251b arranged oppositely in its thickness direction, the third active substance portion 2252 is provided on the second outer surface 2251b, and the fourth active substance portion 2253 is provided on the second inner surface 2251a. The fourth bending portion 227 includes a fourth current collecting portion 2271, a seventh active substance portion 2272, and an eighth active substance portion 2273. The fourth current collecting portion 2271 has a fourth inner surface 2271a and a fourth outer surface 2271b arranged oppositely in its thickness direction, the seventh active substance portion 2272 is provided on the fourth outer surface 2271b, and the eighth active substance portion 2273 is provided on the fourth inner surface 2271a.

It is understood that the second current collecting portion 2251 is a layer of the positive electrode current collector 2211 (refer to FIG. 7) in the bending area B; the third active substance portion 2252 is the first positive active substance layer 2212 (refer to FIG. 7) in the bending area B; and the fourth active substance portion 2253 is a layer of the second positive active substance layer 2213 (refer to FIG. 7) in the bending area B. The fourth current collecting portion 2271 is a layer of the negative electrode current collector 2201 (refer to FIG. 7) in the bending area B; the seventh active substance portion 2272 is a layer of the first negative active substance layer 2202 (refer to FIG. 7) in the bending area B; and the eighth active substance portion 2273 is a layer of the second negative active substance layer 2203 (refer to FIG. 7) in the bending area B.

The active substance capacity per unit area outside the second bending portion 225 is greater than the active substance capacity per unit area inside the second bending portion 225, that is, the active substance capacity per unit area of the third active substance portion 2252 (the outside part of the second bending portion 225) is greater than the active substance capacity per unit area of the fourth active substance portion 2253 (the inside part of the second bending portion 225). The active substance capacity per unit area outside the second bending portion 225 is a ratio of the active material capacity of the third active substance portion 2252 to an area of the second outer surface 2251b, and the active substance capacity per unit area inside the second bending portion 225 is a ratio of the active material capacity of the fourth active substance portion 2253 to an area of the second inner surface 2251a.

The active substance capacity per unit area outside the fourth bending portion 227 is equal to the active substance capacity per unit area inside the fourth bending portion 227, that is, the active substance capacity per unit area of the seventh active substance portion 2272 (the outside part of the fourth bending portion 227) is equal to the active substance capacity per unit area of the eighth active substance portion 2273 (the inside part of the fourth bending portion 227). The active substance capacity per unit area outside the fourth bending portion 227 is a ratio of the active material capacity of the seventh active substance portion 2272 to an area of the fourth outer surface 2271b, and the active substance capacity per unit area inside the fourth bending portion 227 is a ratio of the active material capacity of the eighth active substance portion 2273 to an area of the fourth inner surface 2271a.

In the positive electrode plate 221, all bending portions 223 can be the second bending portions 225, or part of bending portions 223 can be the second bending portions 225. If all the bending portions 223 in the positive electrode plate 221 are the second bending portions 225, the active substance capacity per unit area outside each bending portion 223 of all the bending portions 223 in the positive electrode plate 221 is greater than the inside active substance capacity per unit area. If only part of the bending portions 223 of the positive electrode plate 221 is the second bending portion 225, all the bending portions 223 of the positive electrode plate 221 other than the second bending portion 225 can use a structure that the outside active substance capacity per unit area is equal to the inside active substance capacity per unit area. In the negative electrode plate 220, all bending portions 223 can be the fourth bending portions 227, or only part of bending portions 223 can be the fourth bending portions 227.

In some embodiments, part of the bending portions 223 in the positive electrode plate 221 is the second bending portion 225, and all the bending portions 223 in the negative electrode plate 220 are the fourth bending portions 227.

Among that, one or more bending portions 223 of the positive electrode plate 221 that are at the innermost side of the bending area B are the second bending portions 225. Illustratively, the two innermost bending portions 223 in the positive electrode plate 221 are the second bending portions 225.

In some embodiments, all the bending portions 223 in the positive electrode plate 221 are the second bending portion 225, and all the bending portions 223 in the negative electrode plate 220 are the fourth bending portions 227.

In the present embodiment, in the negative electrode plate 220, each negative active substance layer can be distributed on the negative electrode current collector 2201 with an equal thickness along the winding direction A; and in the positive electrode plate 221, each positive active substance layer can be distributed on the positive electrode current collector 2211 with an equal thickness along the winding direction A.

In the embodiment of the present application, the active substance capacity per unit area outside the second bending portion 225 is greater than the active substance capacity per unit area inside the second bending portion 225, which can be realized in various ways.

In some embodiments, please continue to refer to FIG. 10; a material of the third active substance portion 2252 in the second bending portion 225 is the same as a material of the fourth active substance portion 2253; and a thickness of the third active substance portion 2252 is greater than a thickness of the fourth active substance portion 2253.

When the material of the third active substance portion 2252 is the same as the material of the fourth active substance portion 2253, the thickness of the third active substance portion 2252 is greater than the thickness of the fourth active substance portion 2253. In this way, the active substance capacity per unit area of the third active substance portion 2252 is greater than the active substance capacity per unit area of the fourth active substance portion 2253, so that the active substance capacity per unit area outside the second bending portion 225 is greater than the active substance capacity per unit area inside the second bending portion 225.

It should be noted that the material of the third active substance portion 2252 is the same as the material of the fourth active substance portion 2253, that is, the second inner surface 2251a and the second outer surface 2251b of the second current collecting portion 2251 are coated with the same active substance portion. It is understandable that components of the third active substance portion 2252 are the same as components of the fourth active substance portion 2253, and a proportion of each component of the third active substance portion 2252 is the same as a proportion of each component of the fourth active substance portion 2253. For example, both the third active substance portion 2252 and the fourth active substance portion 2253 include an active material, a conductive agent, and a bonding agent; a proportion of the active material in the third active substance portion 2252 is the same as a proportion of the active material in the fourth active substance portion 2253; a proportion of the conductive agent of the third active substance portion 2252 is the same as a proportion of the conductive agent of the fourth active substance portion 2253; and a proportion of the bonding agent of the third active substance portion 2252 is the same as a proportion of the bonding agent of the fourth active substance portion 2253.

Optionally, the thickness of the third active substance portion 2252 is greater than the thickness of the fourth active substance portion 2253 by 0.5%-20%.

Illustratively, the thickness of the third active substance portion 2252 is greater than the thickness of the fourth active substance portion 2253 by 1.5%-12%.

If one or more bending portions 223 of the positive electrode plate 221 on the innermost side of the bending area B are the second bending portions 225, a thickness of the first positive active substance layer 2212 in one or more innermost circles of the positive electrode plate 221 is greater than that of the second positive active substance layer 2213. Take an example that the two bending portions 223 of the positive electrode plate 221 at the innermost side of the bending area B are the second bending portions 225. A thickness of the first positive active substance layer 2212 at the innermost two circles of the positive electrode plate 221 can be greater than a thickness of the second positive active substance layer 2213, so that the thickness of the third active substance portion 2252 of the second bending portion 225 is greater than the thickness of the fourth active substance portion 2253. In this way, lithium plating is hard to occur in the second bending portion 225 of the two innermost circles of the positive electrode plate 221, which can improve the safety of the battery cell 20, but also improve the energy density of the battery cell 20.

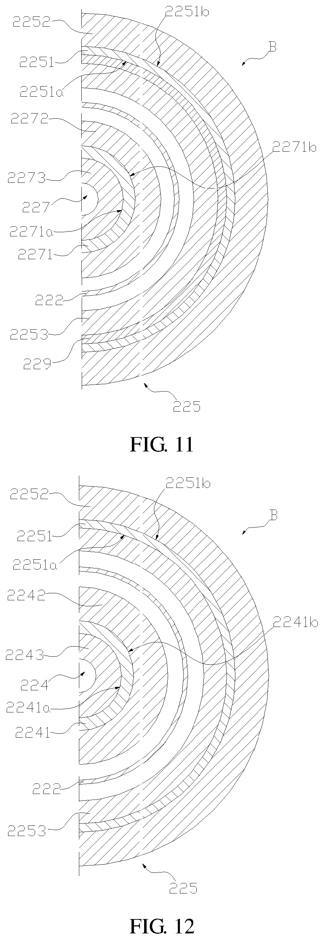

In some embodiments, please refer to FIG. 11. FIG. 11 is a partially enlarged view of the part of the electrode assembly 22 located in the bending area B according to some more embodiments of the present application. The second bending portion 225 further includes a second conductive portion 229, the second conductive portion 229 is connected between the fourth active substance portion 2253 and the second inner surface 2251a of the second current collecting portion 2251, and a thickness of the third active substance portion 2252 is equal to or greater than a total thickness of the fourth active substance portion 2253 and the second conductive portion 229. That is, by providing the second conductive portion 229 between the fourth active substance portion 2253 and the second current collecting portion 2251, the thickness of the third active substance portion 2252 is equal to or greater than the total thickness of the fourth active substance portion 2253 and the second conductive portion 229, so that the thickness of the third active substance portion 2252 is greater than the thickness of the fourth active substance portion 2253.

When the positive electrode plate 221 is produced, it only requires that the thickness of the third active substance portion 2252 is equal to or greater than the total thickness of the fourth active substance portion 2253 and the second conductive portion 229, so that the thickness of the third active substance portion 2252 is greater than the thickness of the fourth active substance portion 2253.

Among that, the second conductive portion 229 can be a pure conductive coating, for example, the second conductive portion 229 is a pure conductive coating composed of a bonding agent and a conductive agent; the second conductive portion 229 can also be an active coating containing lithium ion, for example, the second conductive portion 229 is an active coating containing lithium ions composed of a lithium-rich material, a bonding agent and a conductive agent; the second conductive portion 229 can also be an inactive coating containing lithium ions, for example, the second conductive portion 229 is an inactive coating containing lithium ions composed of a bonding agent, a conductive agent, and lithium powder coated with lithium carbonate.

It should be noted that in other embodiments, the fourth active substance portion 2253 can also be connected between the second conductive portion 229 and the second inner surface 2251a of the second current collecting portion 2251, and the thickness of the third active substance portion 2252 is equal to or greater than the total thickness of the fourth active substance portion 2253 and the second conductive portion 229.

In some embodiments, the active substance capacity per unit area outside the second bending portion 225 is greater than the active substance capacity per unit area inside the second bending portion 225, which can also be realized in other ways. For example, the thickness of the third active substance portion 2252 is equal to the thickness of the fourth active substance portion 2253, and a gram capacity of the active material in the third active substance portion 2252 is greater than a gram capacity of the active material in the fourth active substance portion 2253, so as to realize the active substance capacity per unit area outside the second bending portion 225 is greater than the active substance capacity per unit area inside the second bending portion 225.

In the present embodiment, the active material of the third active substance portion 2252 can be different from the active material of the fourth active substance portion 2253. For example, the active material in the third active substance portion 2252 is ternary lithium, and the active material of the fourth active substance portion 2253 is lithium iron phosphate.

Optionally, the gram capacity of the active material in the third active substance portion 2252 is greater than the gram capacity of the active material in the fourth active substance portion 2253 by 0.5%-20%.

Illustratively, the gram capacity of the active material in the third active substance portion 2252 is greater than the gram capacity of the active material in the fourth active substance portion 2253 by 1.5%-12%.

In other embodiments, the active substance capacity per unit area outside the second bending portion 225 can be greater than the active substance capacity per unit area inside the second bending portion 225, which can also be realized in other ways. For example, the thickness of the third active substance portion 2252 is equal to the thickness of the fourth active substance portion 2253, the active material in the third active substance portion 2252 is the same as the active material in the fourth active substance portion 2253, and a proportion of the active material in the third active substance portion 2252 is greater than a proportion of the active material in the fourth active substance portion 2253.

It should be noted that, in the embodiment of the present application, the active substance capacity per unit area outside the fourth bending portion 227 is equal to the active substance capacity per unit area inside the fourth bending portion 227, which can also be realized in various ways. A material of the seventh active substance portion 2272 in the fourth bending portion 227 is the same as a material of the eighth active substance portion 2273, and a thickness of the seventh active substance portion 2272 is equal to a thickness of the eighth active substance portion 2273.

In some embodiments, please refer to FIG. 12. FIG. 12 is a partially enlarged view of the part of the electrode assembly 22 located in the bending area B according to some more embodiments of the present application. At least one bending portion 223 in the negative electrode plate 220 is a first bending portion 224, and an active substance capacity per unit area outside the first bending portion 224 is greater than an active substance capacity per unit area inside the first bending portion 224; at least one bending portion 223 in the positive electrode plate 221 is a second bending portion 225, and an active substance capacity per unit area outside the second bending portion 225 is greater than an active substance capacity per unit area inside the second bending portion 225.

In the present embodiment, by means of making the thickness of the first active substance portion 2242 of the first bending portion 224 greater than the thickness of the second active substance portion 2243, or by means of making the gram capacity of the active material of the first active substance portion 2242 of the first bending portion 224 greater than the gram capacity of the active material of the second active substance portion 2243, the active substance capacity per unit area outside the first bending portion 224 is greater than the active substance capacity per unit area inside the first bending portion 224. Similarly, by means of making the thickness of the third active substance portion 2252 of the second bending portion 225 greater than the thickness of the fourth active substance portion 2253, or by means of making the gram capacity of the active material of the third active substance portion 2252 of the second bending portion 225 greater than the gram capacity of the active material of the fourth active substance portion 2253, the active substance capacity per unit area outside the second bending portion 225 is greater than the active substance capacity per unit area inside the second bending portion 225.

Illustratively, in FIG. 12, the material of the first active substance portion 2242 of the first bending portion 224 is the same as the material of the second active substance portion 2243; the thickness of the first active substance portion 2242 of the first bending portion 224 is greater than the thickness of the second active substance portion 2243; the material of the third active substance portion 2252 of the second bending portion 225 is the same as the material of the fourth active substance portion 2253; and the thickness of the third active substance portion 2252 of the second bending portion 225 is greater than the thickness of the fourth active substance portion 2253.

In some embodiments, a second bending portion 225 adjacent to the first bending portion 224 is arranged outside the first bending portion 224.

When the active substance capacity per unit area inside the first bending portion 224 and the active substance capacity per unit area outside the second bending portion 225 meet the design requirements, the active substance capacity per unit area outside the first bending portion 224 is greater than the active substance capacity per unit area inside the first bending portion 224, and the active substance capacity per unit area outside the second bending portion 225 is greater than the active substance capacity per unit area inside the second bending portion 225, a CB value of the outside part of the first bending portion 224 can increase, so as to reduce the occurrence of lithium plating phenomenon.

In the present embodiment, in the negative electrode plate 220, all bending portions 223 can be the first bending portions 224, or part of bending portions 223 can be the first bending portions 224. In the positive electrode plate 221, all bending portions 223 can be the second bending portions 225, or part of bending portions 223 can be the second bending portions 225.

In some embodiments, part of the bending portions 223 in the negative electrode plate 220 is the first bending portion 224, and part of the bending portions 223 in the positive electrode plate 221 is the second bending portion 225.

Among that, one or more bending portions 223 in the negative electrode plate 220 on the innermost side of the bending area B are the first bending portions 224. Illustratively, the two innermost bending portions 223 in the negative electrode plate 220 are the first bending portions 224. One or more bending portions 223 of the positive electrode plate 221 on the innermost side of the bending area B are the second bending portions 225. Illustratively, the two innermost bending portions 223 in the positive electrode plate 221 are the second bending portions 225.

In some embodiments, all the bending portions 223 in the negative electrode plate 220 are the first bending portion 224, and all the bending portions 223 in the positive electrode plate 221 are the second bending portions 225.

In the present embodiment, in the negative electrode plate 220, each negative active substance layer can be distributed on the negative electrode current collector 2201 (refer to FIG. 7) with an equal thickness along the winding direction A; and in the positive electrode plate 221, each positive active substance layer can be distributed on the positive electrode current collector 2211 (refer to FIG. 7) with an equal thickness along the winding direction A.

All the bending portions 223 in the negative electrode plate 220 are the first bending portion 224. When the active substance capacity per unit area inside the first bending portion 224 meets the design requirements, since the active substance capacity per unit area outside the first bending portion 224 is greater than the active substance capacity per unit area inside the first bending portion 224, it is equivalent to increasing the active substance capacity per unit area outside the first bending portion 224, so that all CB values of the outside parts of all the bending portions 223 in the negative electrode plate 220 increase, and lithium plating phenomenon is less likely to occur in the part of the negative electrode plate 220 located in the bending area B. All the bending portions 223 in the positive electrode plate 221 are the second bending portions 225. When the active substance capacity per unit area outside the second bending portion 225 meets the design requirements, since the active substance capacity per unit area outside the second bending portion 225 is greater than the active substance capacity per unit area inside the second bending portion, it is equivalent to reducing the active substance capacity per unit area inside the second bending portion 225, so that all CB values of the outside parts of a plurality of the bending portions 223 in the positive electrode plate 221 increase, and lithium plating phenomenon is hard to occur in the part of the positive electrode plate 221 located in the bending area B.

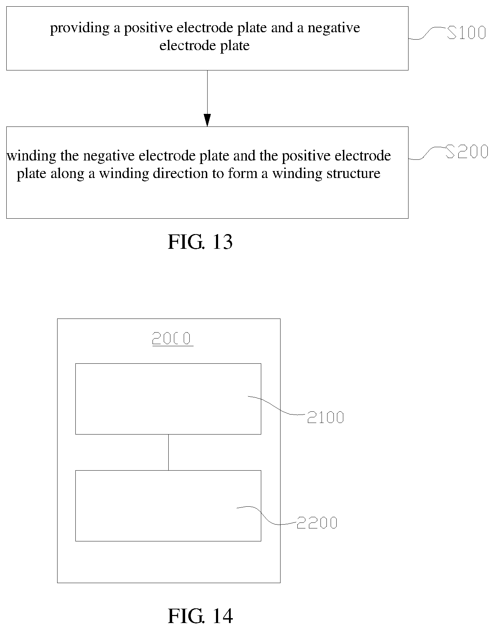

Please refer to FIG. 13. FIG. 13 is a flowchart of an electrode assembly 22 manufacturing method according to some embodiments of the present application. The manufacturing method for the electrode assembly 22 includes:
S100: providing a positive electrode plate 220 and a negative electrode plate 221;
S200: winding the negative electrode plate 220 and the positive electrode plate 221 along a winding direction A to form a winding structure;
where the winding structure includes a bending area B, both the negative electrode plate 220 and the positive electrode plate 221 include a plurality of bending portions 223 located in the bending area B. At least one bending portion 223 in the negative electrode plate 220 is a first bending portion 224, and an active substance capacity per unit area outside the first bending portion 224 is greater than an active substance capacity per unit area inside the first bending portion 224; and/or, at least one bending portion 223 in the positive electrode plate 221 is a second bending portion 225, and an active substance capacity per unit area outside the second bending portion 225 is greater than an active substance capacity per unit area inside the second bending portion 225.

In some embodiments, a separator 222 for separating the positive electrode plate 221 and the negative electrode plate 220 is also provided; and a first electrode plate, the separator 222, and a second electrode plate are wound in a the winding direction A to form a winding structure.

It should be noted that, for the related structure of the electrode assembly 22 manufactured by the above manufacturing method of the electrode assembly 22, please refer to the electrode assembly 22 provided in the above respective embodiment.

Please refer to FIG. 14. FIG. 14 is a schematic block diagram of a manufacturing device 2000 for the electrode assembly 22 according to some embodiments of the present application. The manufacturing device 2000 includes a providing apparatus 2100 and an assembly apparatus 2200. The providing apparatus 2100 is used to provide a negative electrode plate 220 and The positive electrode plate 221, and the assembly apparatus 2200 is used to wind the negative electrode plate 220 and the positive electrode plate 221 along the winding direction A to form a winding structure.

Among that, the winding structure includes a bending area B, both the negative electrode plate 220 and the positive electrode plate 221 include a plurality of bending portions 223 located in the bending area B. At least one bending portion 223 in the negative electrode plate 220 is a first bending portion 224, and an active substance capacity per unit area outside the first bending portion 224 is greater than an active substance capacity per unit area inside the first bending portion 224; and/or, at least one bending portion 223 in the positive electrode plate 221 is a second bending portion 225, and an active substance capacity per unit area outside the second bending portion 225 is greater than an active substance capacity per unit area inside the second bending portion 225.

In some embodiments, the providing apparatus 2100 is also used to provide a separator 222 that separates the positive electrode plate 221 and the negative electrode plate 220. The assembly apparatus 2200 is used to wind the first electrode plate, the separator 222 and the second electrode plate along the winding direction A to form a winding structure.

For the related structure of the electrode assembly 22 manufactured by the above manufacturing device 2000, please refer to the electrode assembly 22 provided in the above respective embodiments.

In addition, an embodiment of the present application further provides a method for testing a CB value of the electrode assembly 22, and steps of testing the CB value is as follows:
Step 1): testing an average discharge capacity of a positive electrode single-sided active substance layer. Taking the positive electrode plate 221 of the above respective embodiment, and using a punching die to obtain a small wafer containing a positive electrode single-sided active substance layer. Using a lithium metal plate as a counter electrode, a Celgard membrane as a separator, a solution of EC+DMC+DEC (a volume ratio of ethylene carbonate, dimethyl carbonate, and diethyl carbonate for 1:1:1) with LiPF6 (1mol/L) dissolved as the electrolytic solution, and assembling 6 identical CR2430 button batteries in a glove box protected by argon. ① Standing still the battery for 12 hours after assembling; ② charging at a constant current of a charging current of 0.1C, until the voltage reaches the upper limit cut-off voltage x1V, and then keeping the voltage x1V to charge at a constant voltage charging, until the current is 50 uA; ③ standing for 5 minutes; ④ finally, performing constant current discharge at a discharge current of 0.1C, until the voltage reaches the lower limit cut-off voltage y1V; ⑤ standing for 5 minutes, repeating steps 2-5, and recording the discharge capacity of the second cycle. The average discharge capacity of the 6 button batteries is the average discharge capacity of the positive electrode single-sided active substance layer. For example, when the positive active substance is lithium iron phosphate (LFP), the upper limit cut-off voltage x1V=3.75V, and the lower limit cut-off voltage y1V=2V. When the positive active substance is lithium nickel cobalt manganese oxide (NCM), the upper limit cut-off voltage x1V=4.25V, and the lower limit cut-off voltage y1V=2.8V.
Step 2): testing an average charge capacity of a negative electrode single-sided active substance layer. Taking the negative electrode plate 220 of the above respective embodiment, and using a punching die to obtain a small wafer containing a negative electrode single-sided membrane layer with the area same as the positive electrode wafer in the above step 1). Using a lithium metal plate as a counter electrode, a Celgard membrane as a separator, a solution of EC+DMC+DEC (a volume ratio of ethylene carbonate, dimethyl carbonate, and diethyl carbonate for 1:1:1) with LiPF6 (1mol/L) dissolved as the electrolytic solution, and assembling 6 CR2430 button batteries in a glove box protected by argon. ① Standing still the battery for 12 hours after assembling; ② discharging at a constant current of a discharging current of 0.05C, until the voltage reaches the lower limit cut-off voltage y2mV; ③ then discharging at a constant current of a discharging current of 50uA, until the voltage reaches the lower limit cut-off voltage y2mV; ④ standing for 5 minutes;⑤ then discharging at a constant current of a discharging current of 10uA, until the voltage reaches the lower limit cut-off voltage y2mV; ⑥ standing for 5 minutes; ⑦ finally, charging at a constant current of a charging current of 0.1C, until the final voltage reaches the upper limit cut-off voltage x2V; ⑧ standing for 5 minutes, repeating steps 2-8, and recording the charge capacity of the second cycle. The average charge capacity of the 6 button batteries is the average charge capacity of the negative electrode single-sided membrane layer. For example, when the negative active material is graphite, the upper limit cut-off voltage x2V=2V, and the lower limit cut-off voltage y2V=5mV. When the negative active material is silicon, the upper limit cut-off voltage x2V=2V, and the lower limit cut-off voltage y2V=5mV.
Step 3): Calculating the CB value, according to the CB value = the average charge capacity (mAh) of the above negative electrode single-sided active substance layer/the average discharge capacity (mAh) of the above positive electrode single-sided active substance layer.

It should be noted that, the embodiments in the present application and features in the embodiments can be mutually combined provided that no conflict is caused.

## Claims

1. An electrode assembly (22), comprising a negative electrode plate (220) and a positive electrode plate (221), the negative electrode plate (220) and the positive electrode plate (221) being wound in a winding direction (A) to form a winding structure, the winding structure comprising a bending area (B);
both the negative electrode plate (220) and the positive electrode plate (221) comprise a plurality of bending portions (223) located in the bending area (B);
wherein at least one bending portion (223) in the negative electrode plate (220) is a first bending portion (224), the first bending portion (224) comprises a first current collecting portion (2241), a first active substance portion (2242), and a second active substance portion (2243);
the first current collecting portion (2241) has a first inner surface (2241a) and a first outer surface (2241b) arranged oppositely in its thickness direction, the first active substance portion (2242) is provided on the first outer surface (2241b), and the second active substance portion (2243) is provided on the first inner surface (2241a);
wherein a material of the second active substance portion (2243) is the same as a material of the first active substance portion (2242), and a thickness of the first active substance portion (2242) is greater than a thickness of the second active substance portion (2243), so that an active substance capacity per unit area of the outer side of the first bending portion (224) is greater than an active substance capacity per unit area of the inner side of the first bending portion (224), wherein the active substance capacity per unit area of the outer side of the first bending portion (224) is a ratio of the active material capacity of the first active substance portion (2242) to an area of the first outer surface (2241b), and the active substance capacity per unit area of the inner side of the first bending portion (224) is a ratio of the active material capacity of the second active substance portion (2243) to an area of the first inner surface (2241a);
a bending portion (223) in the positive electrode plate (221) adjacent to the first bending portion (224) is a third bending portion (226), the third bending portion (226) comprises a third current collecting portion (2261), a fifth active substance portion (2262), and a sixth active substance portion (2263);
the third current collecting portion (2261) has a third inner surface (2261a) and a third outer surface (2261b) arranged oppositely in its thickness direction, the fifth active substance portion (2262) is provided on the third outer surface (2261b), and the sixth active substance portion (2263) is provided on the third inner surface (2261a);
wherein a material of the fifth active substance portion (2262) is the same as a material of the sixth active substance portion (2263), and a thickness of the fifth active substance portion (2262) is equal to a thickness of the sixth active substance portion (2263), so that an active substance capacity per unit area of the outer side of the third bending portion (226) is equal to an active substance capacity per unit area of the inner side of the third bending portion (226), wherein the active substance capacity per unit area of the outer side of the third bending portion (226) is a ratio of the active material capacity of the fifth active substance portion (2262) to an area of the third outer surface (2261b), and the active substance capacity per unit area of the inner side of the third bending portion (226) is a ratio of the active material capacity of the sixth active substance portion (2263) to an area of the third inner surface (2261a); and/or,
at least one bending portion (223) in the positive electrode plate (221) is a second bending portion (225), the second bending portion (225) comprises a second current collecting portion (2251), a third active substance portion (2252), and a fourth active substance portion (2253);
the second current collecting portion (2251) has a second inner surface (2251a) and a second outer surface (2251b) arranged oppositely in its thickness direction, the third active substance portion (2252) is provided on the second outer surface (2251b), and the fourth active substance portion (2253) is provided on the second inner surface (2251a);
wherein a material of the fourth active substance portion (2253) is the same as a material of the third active substance portion (2252), and a thickness of the third active substance portion (2252) is greater than a thickness of the fourth active substance portion (2253), so that an active substance capacity per unit area of the outer side of the second bending portion (225) is greater than an active substance capacity per unit area of the inner side of the second bending portion (225), wherein the active substance capacity per unit area of the outer side of the second bending portion (225) is a ratio of the active material capacity of the third active substance portion (2252) to an area of the second outer surface (2251b), and the active substance capacity per unit area of the inner side of the second bending portion (225) is a ratio of the active material capacity of the fourth active substance portion (2253) to an area of the second inner surface (2251a);
a bending portion (223) in the negative electrode plate (220) adjacent to the second bending portion (225) is a fourth bending portion (227), the fourth bending portion (227) includes a fourth current collecting portion (2271), a seventh active substance portion (2272), and an eighth active substance portion (2273);
the fourth current collecting portion (2271) has a fourth inner surface (2271a) and a fourth outer surface (2271b) arranged oppositely in its thickness direction, the seventh active substance portion (2272) is provided on the fourth outer surface (2271b), and the eighth active substance portion (2273) is provided on the fourth inner surface (2271a);
wherein a material of the seventh active substance portion (2272) is the same as a material of the eighth active substance portion (2273), and a thickness of the seventh active substance portion (2272) is equal to a thickness of the eighth active substance portion (2273), so that an active substance capacity per unit area of the outer side of the fourth bending portion (227) is equal to an active substance capacity per unit area of the inner side of the fourth bending portion (227), wherein the active substance capacity per unit area of the outer side of the fourth bending portion (227) is a ratio of the active material capacity of the seventh active substance portion (2272) to an area of the fourth outer surface (2271b), and the active substance capacity per unit area of the inner side of the fourth bending portion (227) is a ratio of the active material capacity of the eighth active substance portion (2273) to an area of the fourth inner surface (2271a);
wherein the second bending portion (225) further comprises a second conductive portion (229), and the second conductive portion (229) is connected between the fourth active substance portion (2253) and the second inner surface (2251a), a thickness of the third active substance portion (2252) is equal to or greater than a total thickness of the fourth active substance portion (2253) and the second conductive portion (229).

2. The electrode assembly (22) according to claim 1, wherein at least one bending portion (223) in the negative electrode plate (220) is the first bending portion (224), and at least one bending portion (223) in the positive electrode plate (221) is the second bending portion (225), and the second bending portion (225) adjacent to the first bending portion (224) is arranged on the outer side of the first bending portion (224).

3. The electrode assembly (22) according to claim 1, wherein the first bending portion (224) further comprises a first conductive portion (228), and the first conductive portion (228) is connected between the second active substance portion (2243) and the first inner surface (2241a), a thickness of the first active substance portion (2242) is equal to or greater than a total thickness of the second active substance portion (2243) and the first conductive portion (228).

4. The electrode assembly (22) according to any one of claims 1-3, wherein the negative electrode plate (220) comprises a negative electrode current collector (2201) and negative active substance layers provided on both sides in a thickness direction of the negative electrode current collector;
each negative active substance layer is distributed on the negative electrode current collector (2201) with an equal thickness along the winding direction (A); and/or
wherein the positive electrode plate (221) comprises a positive electrode current collector (2211) and positive active substance layers provided on both sides in a thickness direction of the positive electrode current collector;
each positive active substance layer is distributed on the positive electrode current collector (2211) with an equal thickness along the winding direction (A).

5. The electrode assembly (22) according to any one of claims 1-4, wherein all bending portions (223) in the negative electrode plate (220) are the first bending portion (224); and/or
wherein all bending portions (223) in the positive electrode plate (221) are the second bending portion (225).

6. A battery cell (20), comprising a shell (21) and the electrode assembly (22) according to any one of claims 1-5;
the electrode assembly (22) being accommodated in the shell (21).

7. A battery (100), comprising a box body (10), and the battery cell (20) according to claim 6;
the battery cell (20) being accommodated in the box body (10).

8. A power consumption device, comprising the battery (100) according to claim 7.

## Patentansprüche

1. Elektrodenanordnung (22), umfassend eine negative Elektrodenplatte (220) und eine positive Elektrodenplatte (221), wobei die negative Elektrodenplatte (220) und die positive Elektrodenplatte (221) in einer Wickelrichtung (A) gewickelt sind, um eine Wicklungsstruktur zu bilden, wobei die Wicklungsstruktur eine Biegebereich (B) umfasst; und
wobei sowohl die negative Elektrodenplatte (220) als auch die positive Elektrodenplatte (221) eine Mehrzahl von Biegeabschnitten (223) umfassen, die sich in dem Biegebereich (B) befinden;
wobei mindestens ein Biegeabschnitt (223) in der negativen Elektrodenplatte (220) ein erster Biegeabschnitt (224) ist, wobei der erste Biegeabschnitt (224) einen ersten Stromsammelabschnitt (2241), einen ersten Aktivsubstanzabschnitt (2242) und einen zweiten Aktivsubstanzabschnitt (2243) umfasst;
wobei der erste Stromsammelabschnitt (2241) eine erste Innenfläche (2241a) und eine erste Außenfläche (2241b) aufweist, die einander in ihrer Dickenrichtung gegenüberliegend angeordnet sind, wobei der erste Aktivsubstanzabschnitt (2242) auf der ersten Außenfläche (2241b) vorgesehen ist und der zweite Aktivsubstanzabschnitt (2243) auf der ersten Innenfläche (2241a) vorgesehen ist;
wobei ein Material des zweiten Aktivsubstanzabschnitts (2243) dasselbe wie ein Material des ersten Aktivsubstanzabschnitts (2242) ist und eine Dicke des ersten Aktivsubstanzabschnitts (2242) größer als eine Dicke des zweiten Aktivsubstanzabschnitts (2243) ist, sodass eine Aktivsubstanzkapazität pro Flächeneinheit der Außenseite des ersten Biegeabschnitts (224) größer als eine Aktivsubstanzkapazität pro Flächeneinheit der Innenseite des ersten Biegeabschnitts (224) ist, wobei die Aktivsubstanzkapazität pro Flächeneinheit der Außenseite des ersten Biegeabschnitts (224) ein Verhältnis der Aktivmaterialkapazität des ersten Aktivsubstanzabschnitts (2242) zu einer Fläche der ersten Außenfläche (2241b) ist und die Aktivsubstanzkapazität pro Flächeneinheit der Innenseite des ersten Biegeabschnitts (224) ein Verhältnis der Aktivmaterialkapazität des zweiten Aktivsubstanzabschnitts (2243) zu einer Fläche der ersten Innenfläche (2241a) ist;
wobei ein Biegeabschnitt (223) in der positiven Elektrodenplatte (221) benachbart zu dem ersten Biegeabschnitt (224) ein dritter Biegeabschnitt (226) ist, wobei der dritte Biegeabschnitt (226) einen dritten Stromsammelabschnitt (2261), einen fünften Aktivsubstanzabschnitt (2262) und einen sechsten Aktivsubstanzabschnitt (2263) umfasst;
wobei der dritte Stromsammelabschnitt (2261) eine dritte Innenfläche (2261a) und eine dritte Außenfläche (2261b) aufweist, die einander in ihrer Dickenrichtung gegenüberliegend angeordnet sind, wobei der fünfte Aktivsubstanzabschnitt (2262) auf der dritten Außenfläche (2261b) vorgesehen ist und der sechste Aktivsubstanzabschnitt (2263) auf der dritten Innenfläche (2261a) vorgesehen ist;
wobei ein Material des fünften Aktivsubstanzabschnitts (2262) dasselbe wie ein Material des sechsten Aktivsubstanzabschnitts (2263) ist und eine Dicke des fünften Aktivsubstanzabschnitts (2262) gleich einer Dicke des sechsten Aktivsubstanzabschnitts (2263) ist, sodass eine Aktivsubstanzkapazität pro Flächeneinheit der Außenseite des dritten Biegeabschnitts (226) gleich einer Aktivsubstanzkapazität pro Flächeneinheit der Innenseite des dritten Biegeabschnitts (226) ist, wobei die Aktivsubstanzkapazität pro Flächeneinheit der Außenseite des dritten Biegeabschnitts (226) ein Verhältnis der Aktivmaterialkapazität des fünften Aktivsubstanzabschnitts (2262) zu einer Fläche der dritten Außenfläche (2261b) ist und die Aktivsubstanzkapazität pro Flächeneinheit der Innenseite des dritten Biegeabschnitts (226) ein Verhältnis der Aktivmaterialkapazität des sechsten Aktivsubstanzabschnitts (2263) zu einer Fläche der dritten Innenfläche (2261a) ist; und/oder
wobei mindestens ein Biegeabschnitt (223) in der positiven Elektrodenplatte (221) ein zweiter Biegeabschnitt (225) ist, wobei der zweite Biegeabschnitt (225) einen zweiten Stromsammelabschnitt (2251), einen dritten Aktivsubstanzabschnitt (2252) und einen vierten Aktivsubstanzabschnitt (2253) umfasst;
wobei der zweite Stromsammelabschnitt (2251) eine zweite Innenfläche (2251a) und eine zweite Außenfläche (2251b) aufweist, die einander in ihrer Dickenrichtung gegenüberliegend angeordnet sind, wobei der dritte Aktivsubstanzabschnitt (2252) auf der zweiten Außenfläche (2251b) vorgesehen ist und der vierte Aktivsubstanzabschnitt (2253) auf der zweiten Innenfläche (2251a) vorgesehen ist;
wobei ein Material des vierten Aktivsubstanzabschnitts (2253) dasselbe wie ein Material des dritten Aktivsubstanzabschnitts (2252) ist und eine Dicke des dritten Aktivsubstanzabschnitts (2252) größer als eine Dicke des vierten Aktivsubstanzabschnitts (2253) ist, sodass eine Aktivsubstanzkapazität pro Flächeneinheit der Außenseite des zweiten Biegeabschnitts (225) größer als eine Aktivsubstanzkapazität pro Flächeneinheit der Innenseite des zweiten Biegeabschnitts (225) ist, wobei die Aktivsubstanzkapazität pro Flächeneinheit der Außenseite des zweiten Biegeabschnitts (225) ein Verhältnis der Aktivmaterialkapazität des dritten Aktivsubstanzabschnitts (2252) zu einer Fläche der zweiten Außenfläche (2251b) ist und die Aktivsubstanzkapazität pro Flächeneinheit der Innenseite des zweiten Biegeabschnitts (225) ein Verhältnis der Aktivmaterialkapazität des vierten Aktivsubstanzabschnitts (2253) zu einer Fläche der zweiten Innenfläche (2251a) ist;
wobei ein Biegeabschnitt (223) in der negativen Elektrodenplatte (220) benachbart zu dem zweiten Biegeabschnitt (225) ein vierter Biegeabschnitt (227) ist, wobei der vierte Biegeabschnitt (227) einen vierten Stromsammelabschnitt (2271), einen siebten Aktivsubstanzabschnitt (2272) und einen achten Aktivsubstanzabschnitt (2273) umfasst;
wobei der vierte Stromsammelabschnitt (2271) eine vierte Innenfläche (2271a) und eine vierte Außenfläche (2271b) aufweist, die einander in ihrer Dickenrichtung gegenüberliegend angeordnet sind, wobei der siebte Aktivsubstanzabschnitt (2272) auf der vierten Außenfläche (2271b) vorgesehen ist und der achte Aktivsubstanzabschnitt (2273) auf der vierten Innenfläche (2271a) vorgesehen ist;
wobei ein Material des siebten Aktivsubstanzabschnitts (2272) dasselbe wie ein Material des achten Aktivsubstanzabschnitts (2273) ist und eine Dicke des siebten Aktivsubstanzabschnitts (2272) gleich einer Dicke des achten Aktivsubstanzabschnitts (2273) ist, sodass eine Aktivsubstanzkapazität pro Flächeneinheit der Außenseite des vierten Biegeabschnitts (227) gleich einer Aktivsubstanzkapazität pro Flächeneinheit der Innenseite des vierten Biegeabschnitts (227) ist, wobei die Aktivsubstanzkapazität pro Flächeneinheit der Außenseite des vierten Biegeabschnitts (227) ein Verhältnis der Aktivmaterialkapazität des siebten Aktivsubstanzabschnitts (2272) zu einer Fläche der vierten Außenfläche (2271b) ist und die Aktivsubstanzkapazität pro Flächeneinheit der Innenseite des vierten Biegeabschnitts (227) ein Verhältnis der Aktivmaterialkapazität des achten Aktivsubstanzabschnitts (2273) zu einer Fläche der vierten Innenfläche (2271a) ist;
wobei der zweite Biegeabschnitt (225) ferner einen zweiten leitfähigen Abschnitt (229) umfasst und der zweite leitfähige Abschnitt (229) zwischen dem vierten Aktivsubstanzabschnitt (2253) und der zweiten Innenfläche (2251a) verbunden ist, wobei eine Dicke des dritten Aktivsubstanzabschnitts (2252) gleich wie oder größer als eine Gesamtdicke des vierten Aktivsubstanzabschnitt (2253) und des zweiten leitfähigen Abschnitts (229) ist.

2. Elektrodenanordnung (22) nach Anspruch 1, wobei mindestens ein Biegeabschnitt (223) in der negativen Elektrodenplatte (220) der erste Biegeabschnitt (224) ist und mindestens ein Biegeabschnitt (223) in der positiven Elektrodenplatte (221) der zweite Biegeabschnitt (225) ist und der zweite Biegeabschnitt (225) benachbart zu dem ersten Biegeabschnitt (224) auf der Außenseite des ersten Biegeabschnitts (224) angeordnet ist.

3. Elektrodenanordnung (22) nach Anspruch 1, wobei der erste Biegeabschnitt (224) ferner einen ersten leitfähigen Abschnitt (228) umfasst und der erste leitfähige Abschnitt (228) zwischen dem zweiten Aktivsubstanzabschnitt (2243) und der ersten Innenfläche (2241a) verbunden ist, wobei eine Dicke des ersten Aktivsubstanzabschnitts (2242) gleich wie oder größer als eine Gesamtdicke des zweiten Aktivsubstanzabschnitt (2243) und des ersten leitfähigen Abschnitts (228) ist.

4. Elektrodenanordnung (22) nach einem der Ansprüche 1-3, wobei die negative Elektrodenplatte (220) einen negativen Elektrodenstromkollektor (2201) und negative Aktivsubstanzschichten umfasst, die auf beiden Seiten in einer Dickenrichtung des negativen Elektrodenstromkollektors vorgesehen sind;
wobei jede negative Aktivsubstanzschicht auf dem negativen Elektrodenstromkollektor (2201) mit einer gleichen Dicke entlang der Wicklungsrichtung (A) verteilt ist; und/oder
wobei die positive Elektrodenplatte (221) einen positiven Elektrodenstromkollektor (2211) und positive Aktivsubstanzschichten umfasst, die auf beiden Seiten in einer Dickenrichtung des positiven Elektrodenstromkollektors vorgesehen sind;
wobei jede positive Aktivsubstanzschicht auf dem positiven Elektrodenstromkollektor (2211) mit einer gleichen Dicke entlang der Wicklungsrichtung (A) verteilt ist.

5. Elektrodenanordnung (22) nach einem der Ansprüche 1-4, wobei es sich bei allen Biegeabschnitten (223) in der negativen Elektrodenplatte (220) um den ersten Biegeabschnitt (224) handelt; und/oder
wobei es sich bei allen Biegeabschnitten (223) in der positiven Elektrodenplatte (221) um den zweiten Biegeabschnitt (225) handelt

6. Batteriezelle (20), umfassend ein Gehäuse (21) und die Elektrodenanordnung (22) nach einem der Ansprüche 1-5;
wobei die Elektrodenanordnung (22) in dem Gehäuse (21) untergebracht ist.

7. Batterie (100), umfassend einen Kastenkörper (10) und die Batteriezelle (20) nach Anspruch 6; und
wobei die Batteriezelle (20) in dem Kastenkörper (10) untergebracht ist.

8. Leistungsverbrauchsvorrichtung, umfassend die Batterie (100) nach Anspruch 7.

## Revendications

1. Ensemble électrode (22), comprenant une plaque d'électrode négative (220) et une plaque d'électrode positive (221), la plaque d'électrode négative (220) et la plaque d'électrode positive (221) étant enroulées dans une direction d'enroulement (A) pour former une structure d'enroulement, la structure d'enroulement comprenant une zone de courbure (B) ;
la plaque d'électrode négative (220) et la plaque d'électrode positive (221) comprennent toutes deux une pluralité de parties de courbure (223) situées dans la zone de courbure (B) ;
au moins une partie de courbure (223) dans la plaque d'électrode négative (220) étant une première partie de courbure (224), la première partie de courbure (224) comprenant une première partie de collecte de courant (2241), une première partie de substance active (2242), et une deuxième partie de substance active (2243) ;
la première partie de collecte de courant (2241) ayant une première surface interne (2241a) et une première surface externe (2241b) agencées de manière opposée dans sa direction d'épaisseur, la première partie de substance active (2242) étant prévue sur la première surface externe (2241b), et la deuxième partie de substance active (2243) étant prévue sur la première surface interne (2241a) ;
un matériau de la deuxième partie de substance active (2243) étant le même qu'un matériau de la première partie de substance active (2242), et une épaisseur de la première partie de substance active (2242) étant supérieure à une épaisseur de la deuxième partie de substance active (2243), de sorte qu'une capacité de substance active par unité de surface du côté externe de la première partie de courbure (224) est supérieure à une capacité de substance active par unité de surface du côté interne de la première partie de courbure (224), la capacité de substance active par unité de surface du côté externe de la première partie de courbure (224) étant un rapport de la capacité de matériau actif de la première partie de substance active (2242) à une surface de la première surface externe (2241b), et la capacité de substance active par unité de surface du côté interne de la première partie de courbure (224) étant un rapport de la capacité de matériau actif de la deuxième partie de substance active (2243) à une surface de la première surface interne (2241a) ;
une partie de courbure (223) dans la plaque d'électrode positive (221) adjacente à la première partie de courbure (224) étant une troisième partie de courbure (226), la troisième partie de courbure (226) comprenant une troisième partie de collecte de courant (2261), une cinquième partie de substance active (2262), et une sixième partie de substance active (2263) ;
la troisième partie de collecte de courant (2261) ayant une troisième surface interne (2261a) et une troisième surface externe (2261b) agencées de manière opposée dans sa direction d'épaisseur, la cinquième partie de substance active (2262) étant prévue sur la troisième surface externe (2261b), et la sixième partie de substance active (2263) étant prévue sur la troisième surface interne (2261a) ;
un matériau de la cinquième partie de substance active (2262) étant le même qu'un matériau de la sixième partie de substance active (2263), et une épaisseur de la cinquième partie de substance active (2262) étant égale à une épaisseur de la sixième partie de substance active (2263), de sorte qu'une capacité de substance active par unité de surface du côté externe de la troisième partie de courbure (226) est égale à une capacité de substance active par unité de surface du côté interne de la troisième partie de courbure (226), la capacité de substance active par unité de surface du côté externe de la troisième partie de courbure (226) étant un rapport de la capacité de matériau actif de la cinquième partie de substance active (2262) à une surface de la troisième surface externe (2261b), et la capacité de substance active par unité de surface du côté interne de la troisième partie de courbure (226) étant un rapport de la capacité de matériau actif de la sixième partie de substance active (2263) à une surface de la troisième surface interne (2261a) ; et/ou,
au moins une partie de courbure (223) dans la plaque d'électrode positive (221) étant une deuxième partie de courbure (225), la deuxième partie de courbure (225) comprenant une deuxième partie de collecte de courant (2251), une troisième partie de substance active (2252), et une quatrième partie de substance active (2253) ;
la deuxième partie de collecte de courant (2251) ayant une deuxième surface interne (2251a) et une deuxième surface externe (2251b) agencées de manière opposée dans sa direction d'épaisseur, la troisième partie de substance active (2252) étant prévue sur la deuxième surface externe (2251b), et la quatrième partie de substance active (2253) étant prévue sur la deuxième surface interne (2251a) ;
un matériau de la quatrième partie de substance active (2253) étant le même qu'un matériau de la troisième partie de substance active (2252), et une épaisseur de la troisième partie de substance active (2252) étant supérieure à une épaisseur de la quatrième partie de substance active (2253), de sorte qu'une capacité de substance active par unité de surface du côté externe de la deuxième partie de courbure (225) est supérieure à une capacité de substance active par unité de surface du côté interne de la deuxième partie de courbure (225), la capacité de substance active par unité de surface du côté externe de la deuxième partie de courbure (225) étant un rapport de la capacité de matériau actif de la troisième partie de substance active (2252) à une surface de la deuxième surface externe (2251b), et la capacité de substance active par unité de surface du côté interne de la deuxième partie de courbure (225) étant un rapport de la capacité de matériau actif de la quatrième partie de substance active (2253) à une surface de la deuxième surface interne (2251a) ;
une partie de courbure (223) dans la plaque d'électrode négative (220) adjacente à la deuxième partie de courbure (225) étant une quatrième partie de courbure (227), la quatrième partie de courbure (227) comprenant une quatrième partie de collecte de courant (2271), une septième partie de substance active (2272), et une huitième partie de substance active (2273) ;
la quatrième partie de collecte de courant (2271) ayant une quatrième surface interne (2271a) et une quatrième surface externe (2271b) agencées de manière opposée dans sa direction d'épaisseur, la septième partie de substance active (2272) étant prévue sur la quatrième surface externe (2271b), et la huitième partie de substance active (2273) étant prévue sur la quatrième surface interne (2271a) ;
un matériau de la septième partie de substance active (2272) étant le même qu'un matériau de la huitième partie de substance active (2273), et une épaisseur de la septième partie de substance active (2272) étant égale à une épaisseur de la huitième partie de substance active (2273), de sorte qu'une capacité de substance active par unité de surface du côté externe de la quatrième partie de courbure (227) est égale à une capacité de substance active par unité de surface du côté interne de la quatrième partie de courbure (227), la capacité de substance active par unité de surface du côté externe de la quatrième partie de courbure (227) étant un rapport de la capacité de matériau actif de la septième partie de substance active (2272) à une surface de la quatrième surface externe (2271b), et la capacité de substance active par unité de surface du côté interne de la quatrième partie de courbure (227) étant un rapport de la capacité de matériau actif de la huitième partie de substance active (2273) à une surface de la quatrième surface interne (2271a) ;
la deuxième partie de courbure (225) comprenant en outre une deuxième partie conductrice (229), et la deuxième partie conductrice (229) étant connectée entre la quatrième partie de substance active (2253) et la deuxième surface interne (2251a), une épaisseur de la troisième partie de substance active (2252) étant égale ou supérieure à une épaisseur totale de la quatrième partie de substance active (2253) et de la deuxième partie conductrice (229).

2. Ensemble électrode (22) selon la revendication 1, au moins une partie de courbure (223) dans la plaque d'électrode négative (220) étant la première partie de courbure (224), et au moins une partie de courbure (223) dans la plaque d'électrode positive (221) étant la deuxième partie de courbure (225), et la deuxième partie de courbure (225) adjacente à la première partie de courbure (224) étant agencée sur le côté externe de la première partie de courbure (224).

3. Ensemble électrode (22) selon la revendication 1, la première partie de courbure (224) comprenant en outre une première partie conductrice (228), et la première partie conductrice (228) étant connectée entre la deuxième partie de substance active (2243) et la première surface interne (2241a), une épaisseur de la première partie de substance active (2242) étant égale ou supérieure à une épaisseur totale de la deuxième partie de substance active (2243) et de la première partie conductrice (228).

4. Ensemble électrode (22) selon l'une quelconque des revendications 1 à 3, la plaque d'électrode négative (220) comprenant un collecteur de courant d'électrode négative (2201) et des couches de substance active négative prévues sur les deux côtés dans une direction d'épaisseur du collecteur de courant d'électrode négative ;
chaque couche de substance active négative étant distribuée sur le collecteur de courant d'électrode négative (2201) avec une épaisseur égale le long de la direction d'enroulement (A) ; et/ou
la plaque d'électrode positive (221) comprenant un collecteur de courant d'électrode positive (2211) et des couches de substance active positive prévues sur les deux côtés dans une direction d'épaisseur du collecteur de courant d'électrode positive ;
chaque couche de substance active positive étant distribuée sur le collecteur de courant d'électrode positive (2211) avec une épaisseur égale le long de la direction d'enroulement (A).

5. Ensemble électrode (22) selon l'une quelconque des revendications 1 à 4, toutes les parties de courbure (223) dans la plaque d'électrode négative (220) étant la première partie de courbure (224) ; et/ou
toutes les parties de courbure (223) dans la plaque d'électrode positive (221) étant la deuxième partie de courbure (225).

6. Cellule de batterie (20), comprenant une coque (21) et l'ensemble électrode (22) selon l'une quelconque des revendications 1 à 5 ;
l'ensemble électrode (22) étant logé dans la coque (21).

7. Batterie (100), comprenant un corps de boîtier (10), et la cellule de batterie (20) selon la revendication 6 ;
la cellule de batterie (20) étant logée dans le corps de boîtier (10).

8. Dispositif de consommation d'énergie, comprenant la batterie (100) selon la revendication 7.
